# EUROPEAN PATENT APPLICATION

(11) **EP 4 187 865 A1**
(43) Date of publication of application: **31.05.2023**
(21) Application number: 21854006.0
(22) Date of filing: 13.07.2021
(51) Int. Cl.: H04L 45/02

(54) **NETWORK LAYER REACHABLE INFORMATION TRANSMISSION METHOD, SYSTEM AND APPARATUS, AND NETWORK DEVICE**

(30) Priority: 03.08.2020 CN 202010768715; 18.11.2020 CN 202011299988
(71) Applicant: Huawei Technologies Co., Ltd., Shenzhen, Guangdong 518129 (CN)
(72) Inventor: HUANG, Yang, Shenzhen, Guangdong 518129 (CN); WANG, Haibo, Shenzhen, Guangdong 518129 (CN)
(74) Representative: Grünecker Patent- und Rechtsanwälte PartG mbB
(86) International application number: PCT/CN2021/106048
(87) International publication number: WO 2022/028216

(57) **Abstract**

A network layer reachable information transmission method, system, and apparatus, and a network device are provided, which belong to the field of communication technologies. A transmit device in this method may generate, according to a rule, a first part and a second part that are used to advertise a plurality of pieces of network layer reachable information NLRI of a plurality of pieces of destination end information. The first part includes a common information field corresponding to the plurality of pieces of NLRI, the common information field includes same information in the plurality of pieces of NLRI, the second part includes a plurality of private information fields corresponding to the plurality of pieces of NLRI, and each of the plurality of private information fields includes information other than the same information in NLRI corresponding to each private information field. The first part and the second part may be carried in an advertisement packet, to implement compression and sending of information used to advertise the plurality of pieces of NLRI, thereby improving efficiency of advertising a route by the transmit device without affecting normal running of a service.

## Description

This application claims priority to Chinese Patent Application No. 202010768715.7 filed on August 3, 2020 and entitled "ROUTE LENGTH COMPRESSION METHOD AND DEVICE", which is incorporated herein by reference in its entirety.

This application claims priority to Chinese Patent Application No. 202011299988.8 filed on November 18, 2020 and entitled "NETWORK LAYER REACHABLE INFORMATION TRANSMISSION METHOD, SYSTEM, AND APPARATUS AND NETWORK DEVICE", which is incorporated herein by reference in its entirety.

### TECHNICAL FIELD

This application relates to the field of communication technologies, and in particular, to a network layer reachable information transmission method, system, and apparatus and a network device.

### BACKGROUND

An ethernet virtual private network (ethernet virtual private network, EVPN) is a control plane protocol technology based on a border gateway protocol (border gateway protocol, BGP), and can transfer layer 2 media access control (media access control, MAC) information and layer 3 internet protocol (internet protocol, IP) information by using network layer reachable information (network layer reachable information, NLRI).

Some network devices in the EVPN carry hundreds of thousands or even millions of routes, and a relatively large quantity BGP neighbors are established. For example, the network device may be an autonomous system boundary router (autonomous system boundary router, ASBR) device or a route reflector (router reflect, RR) device. For a plurality of received routes with a same BGP attribute, the network device may respectively package the plurality of routes into a plurality of pieces of NLRI, encapsulate the NLRI into a BGP packet, and send the BGP packet to a BGP neighbor, to implement route exchange.

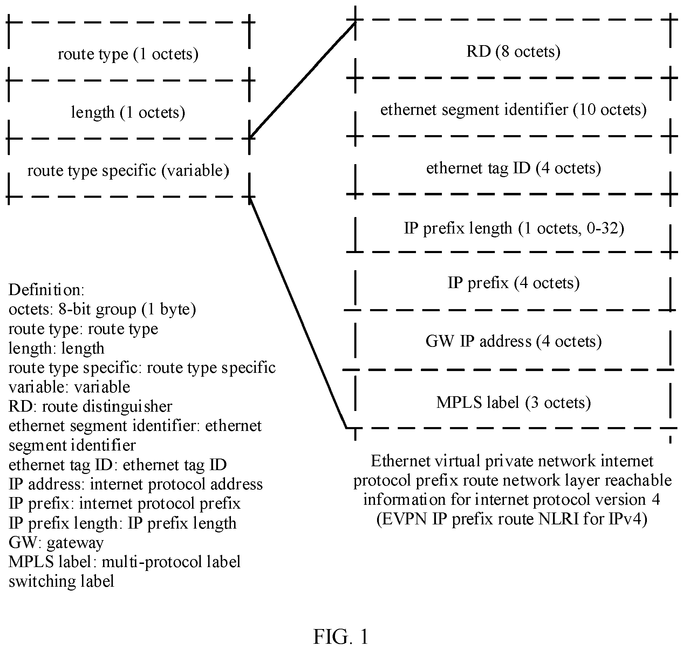

FIG. 1 is a schematic diagram of an encapsulation format of NLRI in a BGP EVPN service scenario. The NLRI includes a route type (route type) field, a length (length) field, and a route type specific (route type specific) field. The route type field is used to store a type identifier of a route type used by the NLRI, and occupies 1 byte (byte). For example, when the type identifier is 2, the route type is a MAC/IP advertisement (advertisement) route. In a possible implementation, for a description of the MAC/IP advertisement route, refer to a description in Request for Comments (request for comments, RFC) 7432 published by the Internet Engineering Task Force (Internet Engineering Task Force, IETF). When the type identifier is 5, the route type is an IP prefix (prefix) route. The length field is used to store a length of the route type specific field, and occupies 1 byte. The route type specific field is used to store routing information. The route type specific field has a variable (variable) length, and may store different routing information. In a possible example, a working group draft (draft-ietf-bess-evpn-prefix-advertisement-11) published by the IETF stipulates that a data format of a route type specific field of an IP prefix route in an EVPN scenario is shown by the route type specific field in FIG. 1. If IP prefix type NLRI follows an internet protocol version 4 (internet protocol version 4, IPv4), the route type specific field includes a route distinguisher (route distinguisher, RD) field, an ethernet segment identifier (ethernet segment identifier, ESI) field, an ethernet tag (ethernet tag) identifier (identifier, ID) field, an IP prefix length field, an IP prefix field, a gateway (gateway, GW) IP address field, and a multi-protocol label switching (multi-protocol label switching, MPLS) label field, which respectively occupy 8 bytes, 10 bytes, 4 bytes, 1 byte, 4 bytes, 4 bytes, and 3 bytes, and are respectively used to store a route distinguisher, an ethernet segment identifier, an ethernet tag identifier (ethernet tag ID), an IP prefix mask length, an IP prefix, a gateway IP address, and a layer 3 (layer 3, L3) multi-protocol label switching label. The RD may be used to indicate a virtual private network (virtual private network, VPN) instance. The ethernet segment identifier may be used to indicate an access interface. The ethernet tag identifier may be used to indicate an accessed virtual local area network (virtual local area network, VLAN) broadcast domain. A value of a length of the IP prefix ranges from 0 to 32 bits (bit). The gateway IP address is a default gateway IP address. The multi-protocol label switching label may be a virtual extensible local area network network identifier (virtual extensible local area network network identifier, VNI). It can be learned that a total length of the IP prefix type NLRI is 1+1+8+10+4+1+4+4+3=36 bytes.

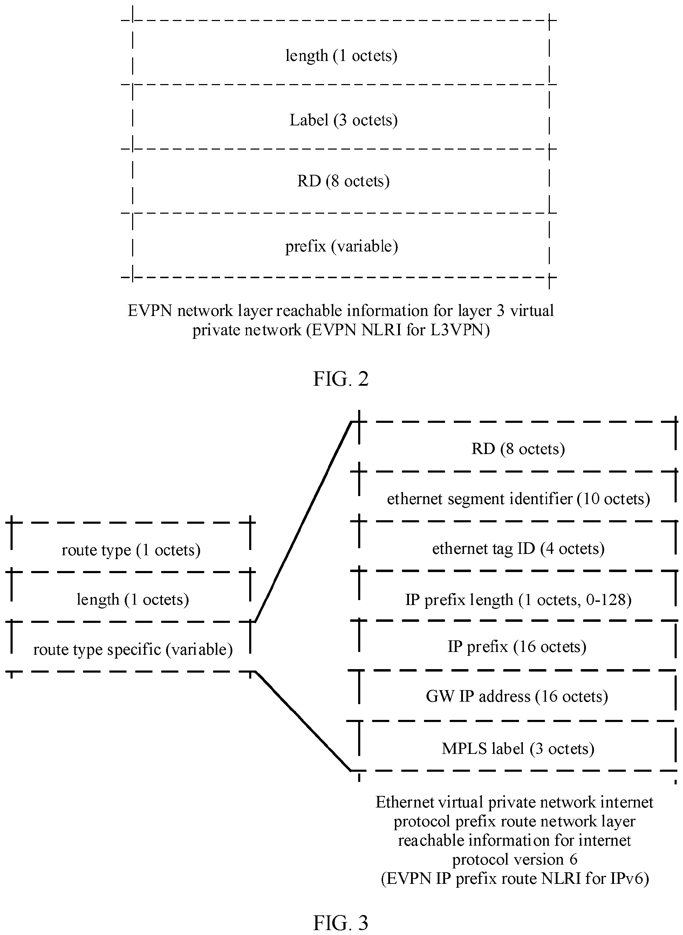

However, a total length of conventional NLRI in a layer 3 (layer 3, L3) virtual private network (virtual private network, VPN) service scenario is less than 36 bytes. For example, FIG. 2 is a schematic diagram of an encapsulation format of conventional IP prefix type NLRI in an L3 VPN scenario, which is referred to as conventional NLRI for short below. The conventional NLRI includes a length field occupying 1 byte, a label field occupying 3 bytes, a route distinguisher field occupying 8 bytes, and a prefix field occupying 0 to 16 bytes. For example, the conventional NLRI follows IPv4. The prefix field of the conventional NLRI occupies 4 bytes. In this case, a total length of the conventional NLRI is 16 bytes.

It can be learned from FIG. 1 and FIG. 2 that, the length of the IP prefix type NLRI in the EVPN scenario is 36 bytes, while the length of the conventional NLRI following IPv4 is 16 bytes. If 4000 bytes of a BGP packet are used to carry NLRI, the BGP packet can carry a maximum of 111 pieces of IP prefix type NLRI in the EVPN scenario, or a maximum of 250 pieces of conventional NLRI. Therefore, in the EVPN service scenario, a quantity of pieces of IP prefix type NLRI that can be carried by the BGP packet is relatively small, resulting in low efficiency of transmitting the IP prefix type NLRI by the BGP packet. Therefore, a transmission method that can improve efficiency of transmitting NLRI in the scenario is urgently needed.

### SUMMARY

Embodiments of this application provide a network layer reachable information transmission method, system, and apparatus and a network device, to improve NLRI transmission efficiency and save network running resources. The technical solutions are as follows:

According to a first aspect, a network layer reachable information transmission method is provided, performed by a first network device. The method includes:
generating an advertisement packet, and sending the advertisement packet to a second network device.

The advertisement packet is used to advertise a plurality of pieces of NLRI of a plurality of destination ends, the advertisement packet includes a first part and a second part, the first part includes a common (common) information field corresponding to the plurality of pieces of NLRI, the common information field includes same information in the plurality of pieces of NLRI, the second part includes a plurality of private (private) information fields corresponding to the plurality of pieces of NLRI, and each of the plurality of private information fields includes information other than the same information in NLRI corresponding to each private information field.

The first network device as a transmit device may advertise a plurality of pieces of NLRI of a plurality of destination ends by using a first part and a second part in a predetermined format, the second part includes a plurality of private information fields, and the plurality of private information fields are all associated with a common information field included in the first part, to implement compression and sending of information used to advertise the plurality of pieces of NLRI. The second network device as a receive device may determine, based on the compressed first part and second part, a plurality of pieces of routing information corresponding to the plurality of pieces of NLRI to support a service. This method can improve efficiency of advertising a route and transmitting the advertised route in a network by the first network device without affecting normal running of a service, and save network running resources.

The destination end may be a destination network or a destination device that a packet needs to reach, and the packet may be a data packet. The destination device may be a user host, or may be a network device, for example, a gateway or a switch. The destination network may be identified by a network segment address, to indicate the packet to reach one or more user hosts or network devices in the destination network based on an identifier of the network segment address.

The first part and the second part may be obtained by compressing a plurality of pieces of locally generated NLRI of the plurality of destination ends. Alternatively, the plurality of pieces of NLRI of the plurality of destination ends may not be generated locally, but instead, the first part and the second part in a compression format are directly generated based on the routing information corresponding to the plurality of destination ends, to advertise the plurality of pieces of routing information of the plurality of destination ends.

Optionally, the first network device can obtain the routing information of the plurality of destination ends, and store the routing information of the plurality of destination ends for subsequent forwarding. When the stored routing information of the plurality of destination ends meets a specified condition, for example, a specific quantity or a sending period is reached, the first network device generates, based on the routing information of the plurality of destination ends, the first part and the second part that correspond to the plurality of destination ends, generate an advertisement packet based on the first part and the second part, and send the advertisement packet to the second network device.

Optionally, the common information field includes at least one of a route distinguisher field, an ethernet segment identifier field, and an ethernet tag identifier field. The route distinguisher field may be used to store a route distinguisher corresponding to one of the plurality of destination ends. The ethernet segment identifier field may be used to store an ethernet segment identifier corresponding to one of the plurality of destination ends. The ethernet tag identifier field may be used to store an ethernet tag identifier corresponding to one of the plurality of destination ends. For example, in a possible case, the plurality of pieces of NLRI of a route type corresponding to a VLAN accessed by a same interface in a same VPN instance may be compressed into the first part and the second part. In this case, the plurality of pieces of NIRI have a same route type, ethernet segment identifier, and ethernet tag identifier. To achieve an objective of compression, the transmit device may store at least one of a type identifier of the route type, the ethernet segment identifier, and the ethernet tag identifier of the plurality of pieces of NIRI into the common information field for sharing between the plurality of private information fields.

Optionally, the common information field further includes a MAC address length field, and the MAC address length field is used to store a MAC address length of one of the plurality of destination ends. For example, when the plurality of pieces of NLRI are MAC/IP advertisement routes, the plurality of pieces of NLRI all include media access control MAC addresses. Because a MAC address length is fixed, that is, lengths of the plurality of MAC addresses of the plurality of destination ends are the same, to facilitate reading of the MAC addresses of the plurality of destination ends carried in the advertisement packet and achieve the objective of compression, the transmit device may store the MAC address length into the MAC address length field in the common information field for sharing between the plurality of private information fields.

Optionally, the common information field further includes a gateway IP address length field and a gateway IP address field, the gateway IP address length field is used to store a gateway IP address length corresponding to one of the plurality of destination ends, and the gateway IP address field is used to store a gateway IP address corresponding to one of the plurality of destination ends. For example, when the plurality of pieces of NLRI are IP prefix routes, the plurality of pieces of NLRI may all include a same gateway IP address. To achieve the objective of compression, the transmit device may store the gateway IP address into the gateway IP address field in the common information field for sharing between the plurality of private information fields. In addition, to facilitate subsequent reading, by the receive device, of the gateway IP address stored in the common information field, the transmit device may further store a length of the gateway IP address into the gateway IP address length field in the common information field, to indicate the stored gateway IP address.

Optionally, the common information field further includes an IP address length field, and the IP address length field is used to store an IP address length of one of the plurality of destination ends. For example, when the plurality of pieces of NLRI are IP prefix routes, the plurality of pieces of NLRI all include IP addresses. If types of the IP addresses included in the plurality of pieces of NLRI are the same, for example, all are internet protocol version 4 (internet protocol version 4, IPv4) addresses, or all are internet protocol version 6 (internet protocol version 6, IPv6) addresses, the IP addresses have a fixed length. To facilitate reading of the IP addresses of the plurality of destination ends carried in the advertisement packet and achieve the objective of compression, the transmit device may store the IP address length into the IP address length field in the common information field for sharing between the plurality of private information fields.

Optionally, the common information field further includes an IP prefix length field, and the IP prefix length field is used to store an IP prefix mask length of one of the plurality of destination ends. For example, when the plurality of pieces of NLRI are IP prefix routes, and the plurality of destination ends have a same IP prefix mask length, to facilitate reading of IP prefix addresses of the plurality of destination ends carried in the advertisement packet and achieve the objective of compression, the transmit device may store the IP prefix mask length into the IP prefix length field in the common information field for sharing between the plurality of private information fields.

Optionally, the common information field further includes a route type field, and the route type field indicates a network device that receives the advertisement packet to obtain, based on the first part and the second part, the plurality of pieces of routing information corresponding to the plurality of destination ends. Alternatively, it may be considered that the route type field is used to indicate that the advertisement packet includes NLRI of a compressed type. The NLRI of the compressed type carried in the advertisement packet is NLRI including the first part and the second part. Optionally, the route type field is used to store a type identifier of a route type used by the plurality of pieces of NLRI. For example, the transmit device may store, into the route type field in the common information field, the type identifier indicating the route type of the plurality of pieces of NLRI, so that a network device that receives the advertisement packet learns that the plurality of pieces of routing information corresponding to the plurality of destination ends can be obtained based on the first part and the second part.

Optionally, the route type includes a MAC/IP advertisement route or an IP prefix route.

Optionally, the common information field further includes a transmission protocol identifier field, and the transmission protocol identifier field is used to store a protocol identifier of a transmission protocol followed by the plurality of pieces of NLRI. The transmission protocol followed by the plurality of pieces of NLRI is indicated by using the protocol identifier stored in the transmission protocol identifier field, so that the receive device subsequently restores the plurality of pieces of NLRI based on an NLRI encapsulation format in the transmission protocol followed by the plurality of pieces of NLRI.

Optionally, the transmission protocol includes IPv4 or IPv6.

Optionally, the common information field further includes a first length field. The first length field may be used to store a total length of the common information field and the plurality of private information fields (when the first part is used to store only the common information field, and the second part is used to store only the plurality of private information fields, it may also be understood as that the first length field is used to store a total length of the NLRI field of the first part and the second part). Alternatively, the first length field is used to store a total length of the common information field. When the first length field stores the total length of the common information field and the plurality of private information fields, the total length of the common information field and the plurality of private information fields can indicate an end position of the first part and the second part that are generated in a compression format, so that the receive device subsequently parses the first part and the second part. When the first length field stores the total length of the common information field, the total length of the common information field can indicate an end position of the common information field, so that the receive device subsequently parses the common information field.

Optionally, the common information field further includes a second length field, and the second length field is used to store a total length of the plurality of private information fields. For example, when the first field is used to store the total length of the common information field, the total length of the plurality of private information fields may be further stored in the second length field in the common information field, so that the receive device subsequently determines end positions of the common information field and the plurality of private information fields based on the first length field and the second length field respectively. In addition, the receive device may further determine a sum of the total length, stored in the first length field, of the common information field and the total length, stored in the second length field, of the plurality of private information fields as a total length of the common information field and the plurality of private information fields, and thereby determine an end position of the first part and the second part.

Optionally, the private information field further includes an IP address length field, and the IP address length field is used to store an IP address length of a destination end corresponding to the private information field. For example, to indicate whether an IP address is stored in the private information field, the transmit device may store an IP address length into the IP address length field in the private information field. If the stored IP address length is 0, it indicates that no IP address is stored in the private information field. If the stored IP address length is not 0, it indicates that an IP address is stored in the private information field, so that the receive device subsequently reads, based on the stored IP address length, the IP address stored in the private information field.

Optionally, the private information field includes an IP address field, and the IP address field is used to store an IP address of a destination end corresponding to the private information field. The IP address of the destination end may be an IP address of a destination device, or may be an IP prefix address of a destination network. For example, the plurality of destination ends have different IP addresses, and the transmit device may store, into an IP address field of a private information field corresponding to each destination end, an IP address of the corresponding destination end, so that the IP address of each destination end corresponds to each destination end.

Optionally, the IP address includes one of an IPv4 address or an IPv6 address. For example, the transmission protocol followed by the plurality of pieces of NLRI may be IPv4 or IPv6. When the transmission protocol followed by the plurality of pieces of NLRI is IPv4, the IP address is an IPv4 address. When the transmission protocol followed by the plurality of pieces of NLRI is IPv6, the IP address is an IPv6 address.

Optionally, the private information field further includes an IP prefix length field, and the IP prefix length field is used to store an IP prefix mask length of a destination end corresponding to the private information field. For example, the plurality of destination ends have different IP prefix masks, and the transmit device may store, into an IP prefix length field of a private information field corresponding to each destination end, an IP prefix mask length of the corresponding destination end, to correspond to an IP prefix address of each destination end.

Optionally, the private information field further includes at least one MPLS label field, and the at least one MPLS label field is used to store at least one MPLS label of a destination end corresponding to the private information field. MPLS labels included in the plurality of pieces of NLRI may be different. For example, when the plurality of pieces of NLRI are MAC/IP advertisement routes, each piece of NLRI includes an MPLS label 1 (MPLS Label 1), and MPLS labels 1 included in the plurality of pieces of NLRI may be different. In some cases, all or some of the plurality of pieces of NLRI further include MPLS labels 2 (MPLS Label 2), and the included MPLS labels 2 may be different. For another example, when the plurality of pieces of NLRI are IP prefix routes, each piece of NLRI includes an MPLS label, and MPLS labels included in the plurality of pieces of NLRI may be different. The transmit device may respectively store the MPLS label included in each piece of NLRI into a private information field corresponding to each piece of NLRI.

Optionally, the private information field further includes an MPLS indication field, and the MPLS indication field is used to indicate the at least one MPLS label field. To facilitate reading, by the receive device, of the at least one MPLS label stored in the private information field, the transmit device may further store indication information of the at least one MPLS label into the MPLS indication field in the private information field, to indicate the at least one MPLS label field stored in the private information field.

Optionally, the private information field further includes a MAC address field, and the MAC address field is used to store a MAC address of the destination end corresponding to the private information field. For example, when the plurality of pieces of NLRI are MAC/IP advertisement routes, the plurality of pieces of NLRI all include MAC addresses, and the MAC addresses of the plurality of destination ends are different. To obtain a MAC address corresponding to each destination end, the transmit device may store, into a MAC address field of a private information field corresponding to each destination end, a MAC address of the corresponding destination end.

Optionally, the private information field further includes a MAC address length field, and the MAC address length field is used to store a MAC address length of the destination end corresponding to the private information field. For example, to improve readability of the private information field, the MAC address length field may not be placed in the common information field, but instead, the MAC address length field may be set in each of the plurality of private information fields of the plurality of pieces of NLRI, to indicate a MAC address stored in each private information field.

Optionally, the private information field further includes a third length field, and the third length field is used to store a length of the private information field. For example, to facilitate parsing of each private information field by the receive device, the transmit device may store a total length of each private information field into the corresponding private information field, to indicate an end position of the corresponding private information field.

Optionally, the method further includes:
storing the first part and the second part or storing the plurality of pieces of NLRI for subsequent query or retransmission.

Optionally, the advertisement packet is a BGP packet, and the first part and the second part may be located in a route that is used by the BGP packet to advertise MAC/IP addresses of the plurality of destination ends. Alternatively, the first part and the second part may be located in a route that is used by the BGP packet to advertise IP prefix addresses of the plurality of destination ends. Alternatively, the first part and the second part may be located at another position of the BGP packet. The foregoing manner of sending the first part and the second part in a compression format by using the BGP packet is applicable to an EVPN network. In this case, both the transmit device configured to send the advertisement packet and the receive device configured to receive the advertisement packet are devices in the EVPN network.

Optionally, each of the first network device and the second network device is one of a provider edge (provider edge, PE) device, an RR, or an autonomous system boundary router. When the first network device is a route reflector, the first network device may have both a route reflection function and a packet forwarding function.

According to a second aspect, a network layer reachable information transmission method is provided. The method is performed by a second network device, and the method includes:
receiving an advertisement packet from a first network device, where the advertisement packet is used to advertise a plurality of pieces of network layer reachable information NLRI of a plurality of destination ends, the advertisement packet includes a first part and a second part, the first part includes a common information field corresponding to the plurality of pieces of NLRI, the common information field includes same information in the plurality of pieces of NLRI, the second part includes a plurality of private information fields corresponding to the plurality of pieces of NLRI, and each of the plurality of private information fields includes information other than the same information in NLRI corresponding to each private information field; and
obtaining, based on the first part and the second part of the advertisement packet, a plurality of pieces of routing information corresponding to the plurality of destination ends.

With this method, the second network device as a receive device determines, based on the first part and the second part in a compression format, the routing information of the plurality of destination ends corresponding to the plurality of pieces of NLRI to support a service. Because the compressed first part and second part include information about the NLRI of the plurality of destination ends, this method can improve efficiency of transmitting the advertised route in a network without affecting normal running of a service, and save network running resources.

Optionally, the common information field includes a route type field, and the obtaining, based on the first part and the second part of the advertisement packet, a plurality of pieces of routing information corresponding to the plurality of destination ends includes:
determining, based on the route type field included in the advertisement packet, to obtain, based on the first part and the second part, the plurality of pieces of routing information corresponding to the plurality of destination ends. The route type field may be used to indicate that the advertisement packet includes NLRI of a compressed type. The NLRI of the compressed type carried in the advertisement packet is NLRI including the first part and the second part.

Optionally, the common information field further includes a first length field, and the obtaining, based on the first part and the second part of the advertisement packet, a plurality of pieces of routing information corresponding to the plurality of destination ends includes: parsing the common information field of the first part based on the first length field, to obtain the plurality of pieces of routing information corresponding to the plurality of destination ends, where the first length field is used to store a total length of the common information field and the plurality of private information fields, or used to store a total length of the common information field.

Optionally, the common information field further includes a second length field, or each of the plurality of private information fields further includes a corresponding third length field, and the obtaining, based on the first part and the second part of the advertisement packet, a plurality of pieces of routing information corresponding to the plurality of destination ends includes: parsing the plurality of private information fields based on the second length field or based on a plurality of third length fields, to obtain the plurality of pieces of routing information corresponding to the plurality of destination ends, where the second length field is used to store a total length of the plurality of private information fields, and the third length field is used to store a length of the corresponding private information field.

In a specific solution of adding, to the advertisement packet, a field used to indicate a length of the common information field and the plurality of private information fields, in a possible implementation, the common information field includes the first length field and the second length field, and the obtaining, based on the first part and the second part of the advertisement packet, a plurality of pieces of routing information corresponding to the plurality of destination ends includes: parsing the common information field of the first part and the plurality of private information fields of the second part based on the first length field and the second length field, to obtain the plurality of pieces of routing information corresponding to the plurality of destination ends, where the second length field is used to store a total length of the plurality of private information fields, and the first length field is used to store a total length of the common information field, or the first length field is used to store a total length of the common information field and the plurality of private information fields.

In another possible implementation, the common information field includes the first length field, each of the plurality of private information fields further includes the third length field, and the obtaining, based on the first part and the second part of the advertisement packet, a plurality of pieces of routing information corresponding to the plurality of destination ends includes: parsing the common information field of the first part and the plurality of private information fields of the second part based on the first length field and the plurality of third length fields, to obtain the plurality of pieces of routing information corresponding to the plurality of destination ends, where the first length field is used to store a total length of the common information field, and the third length field is used to store a length of the corresponding private information field.

Optionally, the common information field includes at least one of a route distinguisher field, an ethernet segment identifier field, and an ethernet tag identifier field. The route distinguisher field is used to store a route distinguisher in one of the plurality of pieces of NLRI. The ethernet segment identifier field is used to store an ethernet segment identifier of one of the plurality of destination ends. The ethernet tag identifier field is used to store an ethernet tag identifier of one of the plurality of destination ends.

Optionally, the common information field further includes a MAC address length field, and the MAC address length field is used to store a MAC address length of one of the plurality of destination ends.

Optionally, the common information field further includes a gateway IP address length field and a gateway IP address field, the gateway IP address length field is used to store a gateway IP address length corresponding to one of the plurality of destination ends, and the gateway IP address field is used to store a gateway IP address corresponding to one of the plurality of destination ends.

Optionally, the common information field further includes an IP address length field, and the IP address length field is used to store an IP address length of one of the plurality of destination ends.

Optionally, the common information field further includes an IP prefix length field, and the IP prefix length field is used to store an IP prefix mask length of one of the plurality of destination ends.

Optionally, the common information field further includes a route type field, and the route type field indicates a network device that receives the advertisement packet to obtain, based on the first part and the second part, the plurality of pieces of routing information corresponding to the plurality of destination ends. Optionally, the route type field is used to store a type identifier of a route type used by the plurality of pieces of NLRI.

Optionally, the route type includes a MAC/IP advertisement route or an IP prefix route.

Optionally, the common information field further includes a transmission protocol identifier field, and the transmission protocol identifier field is used to store a protocol identifier of a transmission protocol followed by the plurality of pieces of NLRI.

Optionally, the transmission protocol includes IPv4 or IPv6.

Optionally, the private information field further includes an IP address length field, and the IP address length field is used to store an IP address length of a destination end corresponding to the private information field.

Optionally, the private information field includes an IP address field, and the IP address field is used to store an IP address of a destination end corresponding to the private information field.

Optionally, the IP address is an IPv4 address or an IPv6 address.

Optionally, the private information field further includes an IP prefix length field, and the IP prefix length field is used to store an IP prefix mask length of a destination end corresponding to the private information field.

Optionally, the private information field further includes at least one MPLS label field, and the at least one MPLS label field is used to store at least one MPLS label of a destination end corresponding to the private information field.

Optionally, the private information field further includes an MPLS indication field, and the MPLS indication field is used to indicate the at least one MPLS label field.

Optionally, the private information field further includes a MAC address field, and the MAC address field is used to store a MAC address of the destination end corresponding to the private information field.

Optionally, the private information field further includes a MAC address length field, and the MAC address length field is used to store a MAC address length of the destination end corresponding to the private information field.

Optionally, the private information field further includes a third length field, and the third length field is used to store a length of the private information field.

Optionally, the method further includes:
storing the first part and the second part or storing the plurality of pieces of NLRI.

Optionally, the method further includes:
after receiving the advertisement packet, determining the plurality of pieces of routing information of the plurality of destination ends based on the plurality of pieces of NLRI or based on the first part and the second part.

Optionally, the advertisement packet is a BGP packet, and the first part and the second part are located in a route that is used by the BGP packet to advertise MAC/IP addresses of the plurality of destination ends. Alternatively, the first part and the second part are located in a route that is used by the BGP packet to advertise IP prefix addresses of the plurality of destination ends. Alternatively, the first part and the second part are located at another position of the BGP packet.

Optionally, each of the first network device and the second network device is one of a PE device, an RR, or an autonomous system boundary router.

Optionally, the destination end is a destination network or a destination device.

According to a third aspect, a network layer reachable information transmission system is provided. The system may include the first network device according to any one of the first aspect or the possible implementations of the first aspect, and include the second network device according to any one of the second aspect or the possible implementations of the second aspect.

Optionally, the first network device is configured to generate an advertisement packet, where the advertisement packet is used to advertise a plurality of pieces of network layer reachable information NLRI of a plurality of destination ends, the advertisement packet includes a first part and a second part, the first part includes a common information field corresponding to the plurality of pieces of NLRI, the common information field includes same information in the plurality of pieces of NLRI, the second part includes a plurality of private information fields corresponding to the plurality of pieces of NLRI, and each of the plurality of private information fields includes information other than the same information in NLRI corresponding to each private information field; and send the advertisement packet to the second network device.

The second network device is configured to receive the advertisement packet, and obtain, based on the first part and the second part of the advertisement packet, a plurality of pieces of routing information corresponding to the plurality of destination ends.

Optionally, the common information field includes a route type field, and that the second network device is configured to obtain, based on the first part and the second part of the advertisement packet, a plurality of pieces of routing information corresponding to the plurality of destination ends includes:
the second network device is configured to determine, based on the route type field included in the advertisement packet, to obtain, based on the first part and the second part, the plurality of pieces of routing information corresponding to the plurality of destination ends. The route type field may also be understood as being used to indicate that the advertisement packet includes NLRI of a compressed type. The NLRI of the compressed type carried in the advertisement packet is NLRI including the first part and the second part.

Optionally, the common information field further includes a first length field, and that the second network device is configured to obtain, based on the first part and the second part of the advertisement packet, a plurality of pieces of routing information corresponding to the plurality of destination ends includes:
the second network device is configured to parse the common information field of the first part based on the first length field, to obtain the plurality of pieces of routing information corresponding to the plurality of destination ends, where the first length field is used to store a total length of the common information field and the plurality of private information fields, or used to store a total length of the common information field.

Optionally, the common information field further includes a second length field, or each of the plurality of private information fields further includes a corresponding third length field, and that the second network device is configured to obtain, based on the first part and the second part of the advertisement packet, a plurality of pieces of routing information corresponding to the plurality of destination ends includes:
the second network device is configured to parse the plurality of private information fields based on the second length field or based on a plurality of third length fields, to obtain the plurality of pieces of routing information corresponding to the plurality of destination ends, where the second length field is used to store a total length of the plurality of private information fields, and the third length field is used to store a length of the corresponding private information field.

Based on length information that is carried in the advertisement packet and that is used to indicate the lengths of the common information field and the plurality of private information fields, the second network device can obtain, based on the first part and the second part, the plurality of pieces of routing information corresponding to the plurality of destination ends. In a possible implementation, the second network device is configured to parse the common information field of the first part and the plurality of private information fields of the second part based on the first length field and the second length field, to obtain the plurality of pieces of routing information corresponding to the plurality of destination ends, where the second length field is used to store a total length of the plurality of private information fields, and the first length field is used to store a total length of the common information field, or the first length field is used to store a total length of the common information field and the plurality of private information fields.

In another possible implementation, the common information field includes the second length field, each of the plurality of private information fields further includes the third length field, and the second network device is configured to parse the common information field of the first part and the plurality of private information fields of the second part based on the first length field and the plurality of third length fields, to obtain the plurality of pieces of routing information corresponding to the plurality of destination ends, where the first length field is used to store a total length of the common information field, and the third length field is used to store a length of the corresponding private information field.

Optionally, after receiving the advertisement packet, the second network device is further configured to store the first part and the second part in the advertisement packet, or first obtain the plurality of pieces of NLRI based on the first part and the second part, and then store the plurality of pieces of NLRI. The stored first part and second part or the plurality of pieces of stored NLRI may be used for subsequent forwarding or route advertisement services. If the first part and the second part are stored, local storage space can be saved. If the plurality of pieces of NLRI are stored, subsequent service execution efficiency can be improved.

Optionally, the second network device may further forward the advertisement packet to another network device. For example, if the second network device is an RR, the second network device may reflect the advertisement packet to another network device for use by the another network device.

Optionally, the common information field includes at least one of a route distinguisher field, an ethernet segment identifier field, and an ethernet tag identifier field. The route distinguisher field is used to store a route distinguisher in one of the plurality of pieces of NLRI. The ethernet segment identifier field is used to store an ethernet segment identifier of one of the plurality of destination ends. The ethernet tag identifier field is used to store an ethernet tag identifier of one of the plurality of destination ends.

Optionally, the common information field further includes a MAC address length field, and the MAC address length field is used to store a MAC address length of one of the plurality of destination ends.

Optionally, the common information field further includes a gateway IP address length field and a gateway IP address field, the gateway IP address length field is used to store a gateway IP address length corresponding to one of the plurality of destination ends, and the gateway IP address field is used to store a gateway IP address corresponding to one of the plurality of destination ends.

Optionally, the common information field further includes an IP address length field, and the IP address length field is used to store an IP address length of one of the plurality of destination ends.

Optionally, the common information field further includes an IP prefix length field, and the IP prefix length field is used to store an IP prefix mask length of one of the plurality of destination ends.

Optionally, the common information field further includes a route type field, and the route type field indicates a network device that receives the advertisement packet to obtain, based on the first part and the second part, the plurality of pieces of routing information corresponding to the plurality of destination ends. Optionally, the route type field is used to store a type identifier of a route type used by the plurality of pieces of NLRI.

Optionally, the route type includes a MAC/IP advertisement route or an IP prefix route.

Optionally, the common information field further includes a transmission protocol identifier field, and the transmission protocol identifier field is used to store a protocol identifier of a transmission protocol followed by the plurality of pieces of NLRI.

Optionally, the transmission protocol includes IPv4 or IPv6.

Optionally, the common information field further includes a first length field. The first length field is used to store a total length of the common information field and the plurality of private information fields. Alternatively, the first length field is used to store a total length of the common information field.

Optionally, the common information field further includes a second length field, and the second length field is used to store a total length of the plurality of private information fields.

Optionally, the private information field includes an IP address length field, and the IP address length field is used to store an IP address length of a destination end corresponding to the private information field.

Optionally, the private information field includes an IP address field, and the IP address field is used to store an IP address of a destination end corresponding to the private information field.

Optionally, the IP address includes one of an IPv4 address or an IPv6 address.

Optionally, the common information field further includes an IP prefix length field, and the IP prefix length field is used to store an IP prefix mask length of one of the plurality of destination ends.

Optionally, the private information field further includes at least one MPLS label field, and the at least one MPLS label field is used to store at least one MPLS label of a destination end corresponding to the private information field.

Optionally, the private information field further includes an MPLS indication field, and the MPLS indication field is used to indicate the at least one MPLS label field.

Optionally, the private information field further includes a MAC address field, and the MAC address field is used to store a MAC address of the destination end corresponding to the private information field.

Optionally, the private information field further includes a MAC address length field, and the MAC address length field is used to store a MAC address length of the destination end corresponding to the private information field.

Optionally, the private information field further includes a third length field, and the third length field is used to store a length of the private information field.

Optionally, the advertisement packet is a BGP packet, and the first part and the second part are located in a route that is used by the BGP packet to advertise MAC/IP addresses of the plurality of destination ends. Alternatively, the first part and the second part are located in a route that is used by the BGP packet to advertise IP prefix addresses of the plurality of destination ends.

Optionally, each of the first network device and the second network device is one of a PE device, an RR, or an autonomous system boundary router.

Optionally, the destination end is a destination network or a destination device.

Optionally, the first network device is further configured to:
store the first part and the second part or store the plurality of pieces of NLRI.

Optionally, the second network device is further configured to:
store the first part and the second part or store the plurality of pieces of NLRI.

According to a fourth aspect, a network layer reachable information transmission apparatus is provided. The apparatus may include a function module configured to perform the network layer reachable information transmission method provided in any one of the first aspect or the optional manners of the first aspect.

For example, the apparatus may include:
a generation module, configured to generate an advertisement packet, where the advertisement packet is used to advertise a plurality of pieces of network layer reachable information NLRI of a plurality of destination ends, the advertisement packet includes a first part and a second part, the first part includes a common information field corresponding to the plurality of pieces of NLRI, the common information field includes same information in the plurality of pieces of NLRI, the second part includes a plurality of private information fields corresponding to the plurality of pieces of NLRI, and each of the plurality of private information fields includes information other than the same information in NLRI corresponding to each private information field; and
a sending module, configured to send the advertisement packet to a second network device.

Optionally, the common information field includes at least one of a route distinguisher field, an ethernet segment identifier field, and an ethernet tag identifier field. The route distinguisher field is used to store a route distinguisher in one of the plurality of pieces of NLRI. The ethernet segment identifier field is used to store an ethernet segment identifier of one of the plurality of destination ends. The ethernet tag identifier field is used to store an ethernet tag identifier of one of the plurality of destination ends.

Optionally, the common information field further includes a MAC address length field, and the MAC address length field is used to store a MAC address length of one of the plurality of destination ends.

Optionally, the common information field further includes a gateway IP address length field and a gateway IP address field, the gateway IP address length field is used to store a gateway IP address length corresponding to one of the plurality of destination ends, and the gateway IP address field is used to store a gateway IP address corresponding to one of the plurality of destination ends.

Optionally, the common information field further includes an IP address length field, the IP address length field is used to store an IP address length of a destination end, and the IP address length field is used to store an IP address length of one of the plurality of destination ends.

Optionally, the common information field further includes an IP prefix length field, and the IP prefix length field is used to store an IP prefix mask length of one of the plurality of destination ends.

Optionally, the common information field further includes a route type field, and the route type field indicates a network device that receives the advertisement packet to obtain, based on the first part and the second part, the plurality of pieces of routing information corresponding to the plurality of destination ends. Optionally, the route type field is used to store a type identifier of a route type used by the plurality of pieces of NLRI.

Optionally, the route type includes a MAC/IP advertisement route or an IP prefix route.

Optionally, the common information field further includes a transmission protocol identifier field, and the transmission protocol identifier field is used to store a protocol identifier of a transmission protocol followed by the plurality of pieces of NLRI.

Optionally, the transmission protocol includes IPv4 or IPv6.

Optionally, the common information field further includes a first length field. The first length field is used to store a total length of the common information field and the plurality of private information fields. Alternatively, the first length field is used to store a total length of the common information field.

Optionally, the common information field further includes a second length field, and the second length field is used to store a total length of the plurality of private information fields.

Optionally, the private information field includes an IP address length field, and the IP address length field is used to store an IP address length of a destination end corresponding to the private information field.

Optionally, the private information field includes an IP address field, and the IP address field is used to store an IP address of a destination end corresponding to the private information field.

Optionally, the IP address includes one of an IPv4 address or an IPv6 address.

Optionally, the private information field further includes an IP prefix length field, and the IP prefix length field is used to store an IP prefix mask length of a destination end corresponding to the private information field.

Optionally, the private information field further includes at least one MPLS label field, and the at least one MPLS label field is used to store at least one MPLS label of a destination end corresponding to the private information field.

Optionally, the private information field further includes an MPLS indication field, and the MPLS indication field is used to indicate the at least one MPLS label field.

Optionally, the private information field further includes a MAC address field, and the MAC address field is used to store a MAC address of the destination end corresponding to the private information field.

Optionally, the private information field further includes a MAC address length field, and the MAC address length field is used to store a MAC address length of the destination end corresponding to the private information field.

Optionally, the private information field further includes a third length field, and the third length field is used to store a length of the private information field.

Optionally, the apparatus further includes:
a storage module, configured to store the first part and the second part or store the plurality of pieces of NLRI.

Optionally, the advertisement packet is a BGP packet, and the first part and the second part are located in a route that is used by the BGP packet to advertise MAC/IP addresses of the plurality of destination ends. Alternatively, the first part and the second part are located in a route that is used by the BGP packet to advertise IP prefix addresses of the plurality of destination ends.

Optionally, each of the apparatus and the second network device is one of a PE device, an RR, or an autonomous system boundary router.

Optionally, the destination end is a destination network or a destination device.

According to a fifth aspect, a network layer reachable information transmission apparatus is provided. The apparatus may include a function module configured to perform the network layer reachable information transmission method provided in any one of the second aspect or the optional manners of the second aspect.

For example, the apparatus may include:
a receiving module, configured to receive an advertisement packet from a first network device, where the advertisement packet is used to advertise a plurality of pieces of network layer reachable information NLRI of a plurality of destination ends, the advertisement packet includes a first part and a second part, the first part includes a common information field corresponding to the plurality of pieces of NLRI, the common information field includes same information in the plurality of pieces of NLRI, the second part includes a plurality of private information fields corresponding to the plurality of pieces of NLRI, and each of the plurality of private information fields includes information other than the same information in NLRI corresponding to each private information field; and
an obtaining module, configured to obtain, based on the first part and the second part of the advertisement packet, a plurality of pieces of routing information corresponding to the plurality of destination ends.

Optionally, the common information field includes a route type field, and the obtaining module is configured to determine, based on the route type field included in the advertisement packet, to obtain, based on the first part and the second part, the plurality of pieces of routing information corresponding to the plurality of destination ends. The route type field may also be understood as being used to indicate that the advertisement packet includes NLRI of a compressed type. The NLRI of the compressed type carried in the advertisement packet is NLRI including the first part and the second part.

Optionally, the common information field further includes a first length field, and the obtaining module is configured to parse the common information field of the first part based on the first length field, to obtain the plurality of pieces of routing information corresponding to the plurality of destination ends, where the first length field is used to store a total length of the common information field and the plurality of private information fields, or used to store a total length of the common information field.

Optionally, the common information field further includes a second length field, or each of the plurality of private information fields further includes a corresponding third length field, and the obtaining module is configured to parse the plurality of private information fields based on the second length field or based on a plurality of third length fields, to obtain the plurality of pieces of routing information corresponding to the plurality of destination ends, where the second length field is used to store a total length of the plurality of private information fields, and the third length field is used to store a length of the corresponding private information field.

In a specific possible implementation, the common information field further includes the first length field and the second length field, and the obtaining module is configured to parse the common information field of the first part and the plurality of private information fields of the second part based on the first length field and the second length field, to obtain the plurality of pieces of routing information corresponding to the plurality of destination ends, where the second length field is used to store a total length of the plurality of private information fields, and the first length field is used to store a total length of the common information field, or the first length field is used to store a total length of the common information field and the plurality of private information fields.

In another specific possible implementation, the common information field further includes the first length field, each of the plurality of private information fields further includes the third length field, and the obtaining module is configured to parse the common information field of the first part and the plurality of private information fields of the second part based on the first length field and the plurality of third length fields, to obtain the plurality of pieces of routing information corresponding to the plurality of destination ends, where the first length field is used to store a total length of the common information field, and the third length field is used to store a length of the corresponding private information field.

Optionally, the common information field includes at least one of a route distinguisher field, an ethernet segment identifier field, and an ethernet tag identifier field. The route distinguisher field is used to store a route distinguisher in one of the plurality of pieces of NLRI. The ethernet segment identifier field is used to store an ethernet segment identifier of one of the plurality of destination ends. The ethernet tag identifier field is used to store an ethernet tag identifier of one of the plurality of destination ends.

Optionally, the common information field further includes a MAC address length field, and the MAC address length field is used to store a MAC address length of one of the plurality of destination ends.

Optionally, the common information field further includes a gateway IP address length field and a gateway IP address field, the gateway IP address length field is used to store a gateway IP address length corresponding to one of the plurality of destination ends, and the gateway IP address field is used to store a gateway IP address corresponding to one of the plurality of destination ends.

Optionally, the common information field further includes an IP address length field, and the IP address length field is used to store an IP address length of one of the plurality of destination ends.

Optionally, the common information field further includes an IP prefix length field, and the IP prefix length field is used to store an IP prefix mask length of one of the plurality of destination ends.

Optionally, the common information field further includes a route type field, and the route type field indicates a network device that receives the advertisement packet to obtain, based on the first part and the second part, the plurality of pieces of routing information corresponding to the plurality of destination ends. Optionally, the route type field is used to store a type identifier of a route type used by the plurality of pieces of NLRI.

Optionally, the route type includes a MAC/IP advertisement route or an IP prefix route.

Optionally, the common information field further includes a transmission protocol identifier field, and the transmission protocol identifier field is used to store a protocol identifier of a transmission protocol followed by the plurality of pieces of NLRI.

Optionally, the transmission protocol includes IPv4 or IPv6.

Optionally, the common information field further includes a first length field. The first length field is used to store a total length of the common information field and the plurality of private information fields. Alternatively, the first length field is used to store a total length of the common information field.

Optionally, the common information field further includes a second length field, and the second length field is used to store a total length of the plurality of private information fields.

Optionally, the private information field includes an IP address length field, and the IP address length field is used to store an IP address length of a destination end corresponding to the private information field.

Optionally, the private information field includes an IP address field, and the IP address field is used to store an IP address of a destination end corresponding to the private information field.

Optionally, the IP address includes one of an IPv4 address or an IPv6 address.

Optionally, the private information field further includes an IP prefix length field, and the IP prefix length field is used to store an IP prefix mask length of a destination end corresponding to the private information field.

Optionally, the private information field further includes at least one MPLS label field, and the at least one MPLS label field is used to store at least one MPLS label of a destination end corresponding to the private information field.

Optionally, the private information field further includes an MPLS indication field, and the MPLS indication field is used to indicate the at least one MPLS label field.

Optionally, the private information field further includes a MAC address field, and the MAC address field is used to store a MAC address of the destination end corresponding to the private information field.

Optionally, the private information field further includes a MAC address length field, and the MAC address length field is used to store a MAC address length of the destination end corresponding to the private information field.

Optionally, the private information field further includes a third length field, and the third length field is used to store a length of the private information field.

Optionally, the apparatus further includes:
a storage module, configured to store the first part and the second part or store the plurality of pieces of NLRI.

Optionally, the apparatus further includes:
a determining module, configured to: after the advertisement packet is received, determine a plurality of routes of the plurality of destination ends based on the plurality of pieces of NLRI or based on the first part and the second part.

Optionally, the advertisement packet is a BGP packet, and the first part and the second part are located in a route that is used by the BGP packet to advertise MAC/IP addresses of the plurality of destination ends. Alternatively, the first part and the second part are located in a route that is used by the BGP packet to advertise IP prefix addresses of the plurality of destination ends.

Optionally, each of the apparatus and the first network device is one of a PE device, an RR, or an autonomous system boundary router.

Optionally, the destination end is a destination network or a destination device.

According to a sixth aspect, a network device is provided. The network device includes a processor, and the processor invokes program instructions, to enable the network device to implement operations performed in the network layer reachable information transmission method provided in any one of the first aspect or the optional manners of the first aspect. The network device may further include a memory. The memory is coupled to the processor, and the program instructions invoked by the processor are stored in the memory. The network device may further include a communication interface. The communication interface is configured for the device to communicate with another device. For example, the communication interface may be a transceiver, a circuit, a bus, a module, or a communication interface of another type. Alternatively, the program instructions invoked by the processor may be prestored in an external memory, and stored locally after downloaded from the internet before use. A source of the instructions in the memory is not limited to a unique manner in this application.

According to a seventh aspect, a network device is provided. The network device includes a processor, and the processor invokes program instructions, to enable the network device to implement operations performed in the network layer reachable information transmission method provided in any one of the second aspect or the optional manners of the second aspect. The network device may further include a memory. The memory is coupled to the processor, and the program instructions invoked by the processor are stored in the memory. The network device may further include a communication interface. The communication interface is configured for the device to communicate with another device. For example, the communication interface may be a transceiver, a circuit, a bus, a module, or a communication interface of another type. Alternatively, the program instructions invoked by the processor may be prestored in an external memory, and stored locally after downloaded from the internet before use. A source of the instructions in the memory is not limited to a unique manner in this application.

According to an eighth aspect, a computer-readable storage medium is provided. The storage medium stores program code, the program code is loaded and executed by a processor, to enable a computer to implement operations performed in the network layer reachable information transmission method provided in any one of the first aspect or the optional manners of the first aspect.

According to a ninth aspect, a computer-readable storage medium is provided. The storage medium stores program code, the program code is loaded and executed by a processor, to enable a computer to implement operations performed in the network layer reachable information transmission method provided in any one of the second aspect or the optional manners of the second aspect.

According to a tenth aspect, a computer program product or a computer program is provided. The computer program product or the computer program includes program code, and when the computer program product or the computer program runs on a network device, the network device is enabled to perform the method provided in any one of the first aspect or the optional implementations of the first aspect.

According to an eleventh aspect, a computer program product or a computer program is provided. The computer program product or the computer program includes program code, and when the computer program product or the computer program runs on a network device, the network device is enabled to perform the method provided in any one of the second aspect or the optional implementations of the second aspect.

The network layer reachable information transmission method provided in any one of the first aspect or the optional manners of the first aspect may be performed by a peer device of a device that performs the network layer reachable information transmission method provided in any one of the second aspect or the optional manners of the second aspect. The solutions provided in the third aspect to the eleventh aspect can be used to implement the network layer reachable information transmission method provided in any one of the first aspect or the optional manners of the first aspect or used to implement the network layer reachable information transmission method provided in any one of the second aspect or the optional manners of the second aspect, and therefore can achieve same beneficial effects as any one of the first aspect or the optional manners of the first aspect, and details are not described herein again.

### BRIEF DESCRIPTION OF DRAWINGS

FIG. 1 is a schematic diagram of an encapsulation format of NLRI in a BGP EVPN service scenario according to a related technology;
FIG. 2 is a schematic diagram of an encapsulation format of conventional IP prefix type NLRI in an L3 VPN scenario according to a related technology;
FIG. 3 is a schematic diagram of an encapsulation format of IP prefix type NLRI following IPv6 according to a related technology;
FIG. 4 is a schematic diagram of an encapsulation format of MAC/IP advertisement type NLRI according to a related technology;
FIG. 5 is a schematic diagram of an encapsulation format of IP prefix type advertisement NLRI following IPv4 according to an embodiment of this application;
FIG. 6 is a schematic diagram of an encapsulation format of IP prefix type advertisement NLRI following IPv6 according to an embodiment of this application;
FIG. 7 is a schematic diagram of an encapsulation format of MAC/IP advertisement type advertisement NLRI according to an embodiment of this application;
FIG. 8 is a schematic diagram of a packet transmission system according to an embodiment of this application;
FIG. 9 is a flowchart of a network layer reachable information transmission method according to an embodiment of this application;
FIG. 10 is a schematic diagram of a structure of a network layer reachable information transmission apparatus according to an embodiment of this application;
FIG. 11 is a schematic diagram of a structure of a network layer reachable information transmission apparatus according to an embodiment of this application;
FIG. 12 is a schematic diagram of a structure of a network device according to an embodiment of this application; and
FIG. 13 is a schematic diagram of a structure of a network device according to an embodiment of this application.

### DESCRIPTION OF EMBODIMENTS

To make objectives, technical solutions, and advantages of this application clearer, the following further describes implementations of this application in detail with reference to the accompanying drawings.

Herein, several types of existing NLRI are first described below.

### 1. IP prefix type NLRI following IPv6

As currently used in an EVPN, some IP prefix type NLRI follows IPv4, such as NLRI shown in FIG. 1, while some IP prefix type NLRI follows IPv6. For example, FIG. 3 is a schematic diagram of an encapsulation format of IP prefix type NLRI following IPv6 according to a related technology. The IP prefix type NLRI following IPv6 includes a route type field occupying 1 byte, a length field occupying 1 byte, and a variable route type specific field. The route type specific field includes a route distinguisher field, an Ethernet segment identifier field, an Ethernet tag identifier field, an IP prefix length field, an IP prefix field, a gateway IP address field, and an MPLS label field, which respectively occupy 8 bytes, 10 bytes, 4 bytes, 1 byte, 16 bytes, 16 bytes, and 3 bytes, and are respectively used to store a route distinguisher, an ethernet segment identifier, an ethernet tag identifier, an IP prefix mask length, an IP prefix, a gateway IP address, and a layer 3 MPLS label. A value of the IPprefix mask length ranges from 0 to 128 bits. A complete IP prefix address can be obtained by parsing out content stored in the IP prefix length field and the IP prefix field. For example, an address 1.0.0.0/8 is used as an example, 8 is an IP prefix mask, and 1.0.0.0 is an IP prefix. A length of the IP prefix type NLRI following IPv6 is 1+1+8+10+4+1+16+16+3=60 bytes.

### 2. MAC/IP advertisement type NLRI

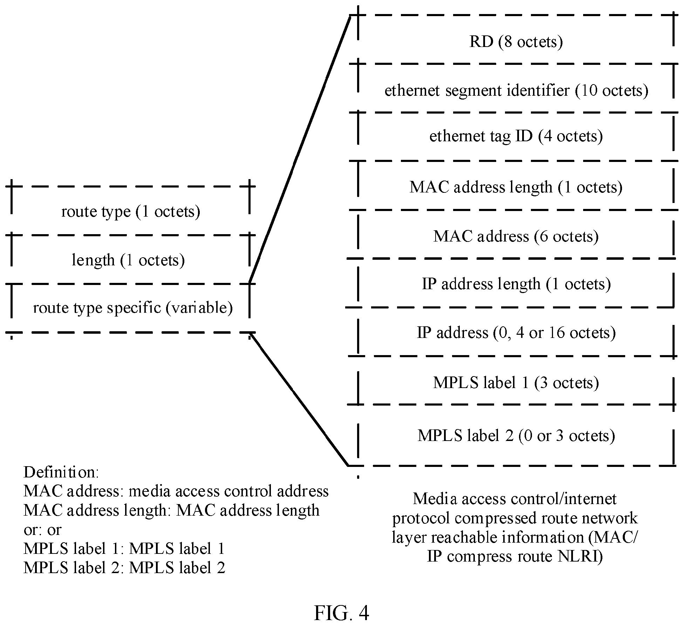

In addition to the IP prefix route, route types of NLRI currently used in the EVPN include a MAC/IP advertisement (advertisement) route. A route type value of the MAC/IP advertisement route is 2. For example, FIG. 4 is a schematic diagram of an encapsulation format of MAC/IP advertisement type NLRI according to a related technology. The MAC/IP advertisement type NLRI is NLRI used to advertise a MAC/IP route. The MAC/IP advertisement type NLRI includes a route type field occupying 1 byte, a length field occupying 1 byte, and a route type specific field. The route type specific field includes a route distinguisher field, an ethernet segment identifier field, an ethernet tag identifier field, a MAC address length field, a MAC address field, an IP address length field, an IP address field, an MPLS label 1 (MPLS Label 1) field, and an MPLS label 2 (MPLS Label 2) field, which respectively occupy 8 bytes, 10 bytes, 4 bytes, 1 byte, 6 bytes, 1 byte, a first byte quantity, 3 bytes, and a second byte quantity, and are respectively used to store a route distinguisher, an ethernet segment identifier, an ethernet tag identifier, a MAC address length, a MAC address, an IP address length, an IP address, an MPLS label 1, and an MPLS label 2. The MPLS label 1 is an MPLS label corresponding to the MAC address, that is, a layer 2 MPLS label. The MPLS label 2 is an MPLS label corresponding to the IP address, that is, a layer 3 MPLS label. The first byte quantity is a quantity of bytes occupied by the IP address, including 0 bytes, 4 bytes, or 16 bytes. The second byte quantity is a quantity of bytes occupied by the MPLS label 2, including 0 bytes or 3 bytes.

Routing information in the route specific field of the MAC/IP advertisement type NLRI is not fixed, and the MAC/IP advertisement type NLRI has at least the following five cases A to E.

### Case A: MAC-only route (MAC-only route)

If the MAC/IP advertisement type NLRI is used to transfer MAC information, the IP address occupies 0 bytes and the MPLS label 2 is not carried. That is, the first byte quantity is 0, and the second byte quantity is 0. In this case, a length of the MAC/IP advertisement type NLRI is 1+1+8+10+4+1+6+1+0+3+0=35 bytes.

### Case B: MAC-IPv4 route that does not carry the MPLS label 2

If the MAC/IP advertisement type NLRI is used to transfer MAC information and IP information, does not carry the MPLS label 2, and follows IPv4, the IP address occupies 4 bytes. That is, the first byte quantity is 4, and the second byte quantity is 0. In this case, a length of the MAC/IP advertisement type NLRI is 1+1+8+10+4+1+6+1+4+3+0=39 bytes.

### Case C: MAC-IPv4 route that carries the MPLS label 2

If the MAC/IP advertisement type NLRI is used to transfer MAC information and IP information, carries the MPLS label 2, and follows IPv4, the IP address occupies 4 bytes. That is, the first byte quantity is 4, and the second byte quantity is 3. In this case, a length of the MAC/IP advertisement type NLRI is 1+1+8+10+4+1+6+1+4+3+3=42 bytes.

### Case D: MAC-IPv6 route that does not carry the MPLS label 2

If the MAC/IP advertisement type NLRI is used to transfer MAC information and IP information, does not carry the MPLS label 2, and follows IPv6, the IP address occupies 16 bytes. That is, the first byte quantity is 16, and the second byte quantity is 0. In this case, a length of the MAC/IP advertisement type NLRI is 1+1+8+10+4+1+6+1+16+3+0=51 bytes.

### Case E: MAC-IPv6 route that carries the MPLS label 2

If the MAC/IP advertisement type NLRI is used to transfer MAC information and IP information, carries the MPLS label 2, and follows IPv6, the IP address occupies 16 bytes. That is, the first byte quantity is 16, and the second byte quantity is 3. In this case, a length of the MAC/IP advertisement type NLRI is 1+1+8+10+4+1+6+1+16+3+3=54 bytes.

In a related technology, a network device generally packages a plurality of pieces of NLRI (for example, at least one type of NLRI in FIG. 1 to FIG. 4) into a BGP packet, and sends the BGP packet to another network device, to implement NLRI transmission. However, in the packaging process, the network device packages each field of the plurality of pieces of NLRI into the BGP packet without compressing fields of the plurality of pieces of NLRI. The compressing herein refers to merging some fields in the plurality of pieces of NLRI based on a rule or a manner, to reduce a total field length occupied by the plurality of pieces of NLRI in the BGP packet. In an example of a merging manner provided in embodiments of this application, because route distinguishers, ethernet segment identifiers, ethernet tag identifiers, and route types corresponding to a plurality of pieces of NLRI of a route type corresponding to a VLAN accessed by a same access interface are the same in a same VPN instance, the plurality of pieces of NLRI may form an NLRI set. When packaging the NLRI set, a network device may merge information of same fields in the plurality of pieces of NLRI in the NLRI set, that is, the same route distinguisher, ethernet segment identifier, ethernet tag identifier, and route type fields. In a specific implementation, in embodiments of this application, when packaging the plurality of pieces of NLRI in the NLRI set into an advertisement packet, the network device can use, as a common information field, the same route distinguisher field, ethernet segment identifier field, ethernet tag identifier field, and route type field whose content can be shared between the plurality of pieces of NLRI, to achieve an objective of compressing the plurality of pieces of NLRI in the advertisement packet, thereby improving sending efficiency and transmission efficiency of the advertisement packet.

The plurality of pieces of NLRI may include reachable information that needs to be advertised and that respectively corresponds to a plurality of destination ends belonging to a same VLAN. One piece of NLRI before compression may be used to advertise MAC information and/or IP information of one destination end. A receiver may obtain the plurality of pieces of NLRI, and obtain routes of the plurality of destination ends corresponding to the plurality of pieces of NLRI.

The foregoing uses an example in which the common information field of the plurality of pieces of NLRI include the route distinguisher, the ethernet segment identifier, the ethernet tag identifier, and the route type. In another possible case, content in the common information field of the plurality of pieces of NLRI may alternatively be determined with reference to a scenario or a requirement.

As a general description, with a method provided in embodiments of the present invention, a network device may process and generate information in a particular format. For ease of description, the information in the particular format is referred to as advertisement NLRI below. The advertisement NLRI can be carried in an advertisement packet, and sent to another network device to advertise reachable information of a plurality of destination ends, so that the another network device obtains a plurality of pieces of routing information of the plurality of destination ends based on the advertisement NLRI. The processed and generated advertisement NLRI includes a first part and a second part. The first part includes a common information field corresponding to the plurality of pieces of NLRI. The common information field includes same information in the plurality of pieces of NLRI. In other words, the common information field is used to store same information in the plurality of pieces of NLRI. The same information stored in the common information field is information shared between the plurality of pieces of NLRI, or referred to as common information of the plurality of pieces of NLRI. The same information in the plurality of pieces of NLRI refers to same information stored at a same field position of the plurality of pieces of NLRI. For example, if content stored at a position of an A field of the plurality of pieces of NLRI is a, the A field may be a component field in the common information field of the plurality of pieces of NLRI, and specific content of the component field is a. The second part includes a plurality of private information fields respectively corresponding to the plurality of pieces of NLRI. Each of the plurality of private information fields includes information other than the same information in NLRI corresponding to each private information field. In other words, one private information field is used to store information other than the same information in one piece of NLRI, that is, information in one piece of NLRI other than the information in the common information field is considered as private information of the one piece of NLRI. The advertisement NLRI may be carried at various possible specified positions in the advertisement packet. Depending on different carrying manners, the first part and the second part of the advertisement NLRI may be adjacent to each other, or may not be adjacent to each other, but can be associated in a manner for subsequent parsing.

In some possible cases, one private information field may include information specific to one piece of NLRI other than another one of the plurality of pieces of NLRI, that is, information content included at a same field position in different NLRI is different, such as a MAC address field or an IP address field. In some other possible cases, the private information field may include information of one piece of NLRI different from that of the plurality of pieces of NLRI. The different herein may be different based on a specific property, or may be different in a non-strict sense. For example, for an MPLS label 1 or MPLS label 2 field in a MAC/IP advertisement route, generally, content of MPLS label 1 or MPLS label 2 fields included in a plurality of pieces of NLRI is different from each other, but in some implementation scenarios, on the premise that normal running of a service is not affected, content of the MPLS label 1 or MPLS label 2 fields included in a plurality of pieces of NLRI is not strictly prohibited to be the same. As a result, content of some or even all of the MPLS label 1 or MPLS label 2 fields in the plurality of pieces of NLRI is the same. In some other possible cases, for reasons such as ease of parsing or definition, the private information field may alternatively include same information content included at a same field position in the plurality of pieces of NLRI, such as a MAC address length field, though for the plurality of pieces of NLRI, values of the MAC address length field are substantially completely the same.

Optionally, the plurality of private information fields are sequentially located behind the common information field, so that each private information field can share the common information field, and is easily identified in an arrangement structure. Optionally, the common information field and the plurality of private information fields that are sequentially arranged may form a continuous NLRI field. Each private information field and the common information field in the advertisement NLRI generated by compression form one of the plurality of pieces of NLRI, so that a network device that receives the advertisement packet can restore complete information of the plurality of pieces of NLRI based on the advertisement NLRI, to obtain a plurality of pieces of routing information corresponding to the plurality of pieces of NLRI, to perform a service. Therefore, the advertisement NLRI may also be referred to as a compressed route NLRI. The advertisement NLRI can be used to achieve an objective of compressing the plurality of pieces of NLRI, so that when an advertisement packet uses the advertisement NLRI to transfer information carried in the plurality of pieces of NLRI, NLRI sending efficiency and transmission efficiency can be improved.

The following provides examples of several possible arrangement manners of the advertisement NLRI generated by compression. In actual application, the following arrangement manners may be selected based on factors such as a design requirement, a scenario requirement, and an original NLRI format before compression, or another optional arrangement manner following the idea of performing compression arrangement by using one common information field and a plurality of private information fields is customized.

The common information field includes at least one of a route distinguisher field, an ethernet segment identifier field, and an ethernet tag identifier field. The route distinguisher field is used to store a route distinguisher in one of the plurality of pieces of NLRI. The ethernet segment identifier field is used to store an ethernet segment identifier of one of the plurality of destination ends. The ethernet tag identifier field is used to store an ethernet tag identifier of one of the plurality of destination ends. Optionally, the common information field further includes a route type field, and the route type field may be used to indicate that the plurality of pieces of NLRI are transmitted in a compression format, so that a device that receives the advertisement NLRI can determine, based on the route type field, that the routing information of the plurality of destination ends corresponding to the plurality of pieces of NLRI may be obtained based on the first part and the second part. The route type field may occupy, for example, 1 byte to store a type identifier of a route type corresponding to the advertisement NLRI. The stored type identifier may be further subject to type subdivision, to use different type identifiers to distinguish whether the advertisement NLRI in a compression format is a MAC/IP advertisement route or an IP prefix route.

Optionally, the common information field further includes a MAC address length field, which is applicable to arrangement of a MAC/IP advertisement route or the like, and the MAC address length field is used to store a MAC address length of one of the plurality of destination ends. Optionally, the common information field further includes a gateway IP address length field and a gateway IP address field, which is applicable to arrangement of an IP prefix route or the like, the gateway IP address length field is used to store a gateway IP address length corresponding to one of the plurality of destination ends, and the gateway IP address field is used to store a gateway IP address corresponding to one of the plurality of destination ends. Optionally, the common information field further includes an IP address length field, which is applicable to arrangement of an IP prefix route or the like, and the IP address length field is used to store an IP address length of one of the plurality of destination ends. Optionally, the common information field further includes an IP prefix length field, and the IP prefix length field is used to store an IP prefix mask length of one of the plurality of destination ends. Optionally, the common information field further includes a first length field, and the first length field is used to store a total length of the common information field and the plurality of private information fields. That is, the first length field is used to indicate a total length of the advertisement NLRI. In this case, the first length field may occupy 2 bytes. Alternatively, the first length field is used to store a total length of the common information field. In this case, the first length field may occupy 1 byte. Optionally, the common information field further includes a transmission protocol identifier field, the transmission protocol identifier field is used to indicate a protocol identifier of a transmission protocol followed by the plurality of pieces of NLRI, and may occupy 1 byte, and the transmission protocol includes IPv4 or IPv6. For example, when the first length field is used to indicate the total length of the common information field, to facilitate a receive network device to determine a length of a private information field to parse the advertisement NLRI, the common information field may include the transmission protocol identifier field. To describe the plurality of private information fields as a whole, optionally, the common information field further includes a second length field, and the second length field is used to indicate a total length of the plurality of private information fields, and may occupy 2 bytes. If the plurality of private information fields are a plurality of pieces of sub NLRI (sub NLRI) in the advertisement NLRI, the total length of the plurality of private information fields is a sub-NLRI length (sub NLRI length). For the first length field and the second length field, in some cases, if the common information field includes the first length field, and the first length field is used to store the total length of the common information field, the common information field does not include the second length field. For example, when formats of a plurality of private information fields of a plurality of host devices (that is, the destination ends) connected to a PE device (that is, the network device that generates the advertisement packet) are the same, and a structure of the format is learned in advance by a PE device at a receive end, the common information field does not include the second length field. In some other cases, if the common information field includes the first length field, and the first length field is used to store the total length of the common information field, the common information field further includes the second length field, which is applicable at least to a case in which each private information field has a same format, but is not learned in advance by a receive end. In some other cases, the common information field does not include the first length field but includes the second length field. For example, when formats of common information fields of a plurality of host devices connected to a PE device are the same, and a structure of the format is learned in advance by a PE device at a receive end, the common information field does not include the first length field.

A private information field includes an IP address field. The IP address field is used to store an IP address of a destination end corresponding to the private information field, that is, used to store an IP address of a destination end. The IP address may include one of an IPv4 address or an IPv6 address. Optionally, if the common information field does not include an IP address length field, to describe the IP address field, the private information fields further includes an IP address length field, and the IP address length field is used to store an IP address length of one of the plurality of destination ends. Optionally, if the common information field does not include an IP prefix length field, to describe complete information of an IP address presented in a form of an IP prefix, a private information field further includes an IP prefix length field, the IP prefix length field is used to store an IP prefix mask length of a destination end corresponding to the private information field, and the IP prefix length field occupies 1 byte. In some possible cases, the complete information of the IP address needs to be expressed by using content stored in the IP address field together with the IP prefix length field or the like, for example, for an IP prefix type route. Therefore, the IP address field may also be referred to as an IP prefix address field or an IP prefix field, and an IP address actually carried in the IP prefix field may be referred to as an IP prefix. Optionally, the private information field further includes a MAC address field, and the MAC address field is used to store a MAC address of the destination end corresponding to the private information field. Optionally, if the plurality of pieces of NLRI are all used to transmit MAC information, and the common information field does not include a MAC address length field, the private information field further includes a MAC address length field, and the MAC address length field is used to store a MAC address length of the destination end corresponding to the private information field. Optionally, each private information field further includes a third length field, and the third length field is used to store a length of each private information field. That is, the private information field further includes a third length field, and the third length field is used to store a length of the private information field, and occupies 1 byte. In a possible case, if the common information field does not include the second length field, a private information field includes a third length field, to record a length of the private information field. In some other cases, if the common information field includes the second length field, the private information field may not include the third length field, but may include an address length field of an IP address or a MAC address, to help parse out an IP address or a MAC address carried in the private information field.

The foregoing description uses the first length field, the second length field, and the third length field as examples. In another possible case, a length field with another meaning may alternatively be defined and placed in the common information field or the private information field, provided that one or more length fields defined in the advertisement NLRI can be used in conjunction with other fields to normally parse the advertisement NLRI. For example, in a possible implementation, the first length field and the second length field described above are defined in the common information field, the first length field is used to store the total length of the common information field, and the second length field is used to store the total length of the plurality of private information fields. In addition, a fourth length field is further defined in the common information field, and the fourth length field is used to store a length of each of the plurality of private information fields. In this way, when lengths of the plurality of private information fields are the same, a quantity of the plurality of private information fields carried in the advertisement NLRI may be determined based on the second length field and the fourth length field, to determine a parsing end position.

Optionally, a private information field further includes at least one multi-protocol label switching MPLS label field, and the at least one MPLS label field is used to store at least one MPLS label of a destination end corresponding to the private information field, for example, at least one of an MPLS label 1 field and an MPLS label 2 field in a MAC/IP advertisement route, or an MPLS label field in an IP prefix route. Optionally, the private information field further includes an MPLS indication field, and the MPLS indication field is used to indicate the at least one MPLS label field. In a possible implementation, the MPLS indication field is used to store a total length of the at least one MPLS label field, and a quantity of MPLS label fields in the private information field is indicated by using the total length. For example, if a field value of the MPLS indication field (that is, the total length of the at least one MPLS label field) is 3, because one MPLS label field is predefined to occupy 3 bytes, the MPLS indication field whose field value is 3 is used to indicate that there is one MPLS label field in the private information field. For another example, if the field value of the MPLS indication field is 6, it indicates that there are two MPLS label fields in the private information field. In another possible implementation, a target bit in the MPLS indication field is used to indicate the at least one MPLS label field, and a type of the MPLS label field in the private information field may be specifically indicated by using a value of the target bit. If a MAC/IP advertisement route is used as an example, the target bit in the MPLS indication field may be the first 2 bits of the field. If the first bit of the MPLS indication field is 1, it indicates that there is an MPLS label 1 field in the private information field. If the second bit of the MPLS indication field is 1, it indicates that there is an MPLS label 2 field in the private information field. If the MPLS indication field occupies 1 byte, another bit other than the target bit in the MPLS indication field is used as a reserved bit, and can be used to indicate an extended MPLS label field other than the MPLS label 1 field and the MPLS label 2 field. In another possible implementation, the MPLS indication field is used to store a quantity of the at least one MPLS label field. For example, if a field value of the MPLS indication field (that is, the quantity of the at least one MPLS label field) is 1, it indicates that there is one MPLS label field in the private information field. For another example, if the field value of the MPLS indication field is 2, it indicates that there are two MPLS label fields in the private information field. In another possible implementation, if the private information field includes the third length field but does not include the MPLS indication field, when the network device parses the private information field, an MPLS label field is parsed by relying on the third length field. For example, the total length, stored in the third field, of the private information field is 8 bytes. When parsing the private information field, the network device learns that the first 5 bytes of the private information field are an IP address length field and an IP address field. Because the total length of the private information field is 8 bytes, the last 3 bytes of the private information field are an MPLS label field.

The advertisement NLRI is obtained by the network device by compressing the plurality of pieces of NLRI, and the route type of the advertisement NLRI is substantially the same as the route types of the plurality of pieces of NLRI. That the route types are substantially the same means that the advertisement NLRI and the plurality of pieces of NLRI as routes of the same type can implement a same routing function, regardless of whether the route type of the advertisement NLRI and the route types of the plurality of pieces of NLRI are named the same. When transmission protocols followed by the plurality of pieces of NLRI are the same, a transmission protocol followed by the advertisement NLRI and the transmission protocols followed by the plurality of pieces of NLRI are also the same. For example, they follow an IPv4 or IPv6 transmission protocol, but have different encapsulation formats. The route types of the plurality of pieces of NLRI may have a plurality of cases. For example, the plurality of pieces of NLRI are IP prefix type NLRI following IPv4 or IPv6 (that is, the NLRI shown in FIG. 1 and FIG. 3) or MAC/IP advertisement type NLRI (that is, the NLRI shown in FIG. 4). For any one of the foregoing cases, the route type of the advertisement NLRI is consistent with the route types of the plurality of pieces of NLRI, but content included in common information fields and/or private information fields of advertisement NLRI of different route types may be different. Herein, in embodiments of this application, advertisement NLRI of different route types or following different transmission protocols are separately described in the following cases 1 to 3.

### Case 1. IP prefix type advertisement NLRI following IPv4

If N pieces of NLRI are all IP prefix type NLRI following IPv4 shown in FIG. 1, a network device uses IP prefix type advertisement NLRI following IPv4 to carry information in the N pieces of NLRI, to achieve an objective of compressing the N pieces of NLRI by using the advertisement NLRI. N is an integer greater than 1. The advertisement NLRI may be referred to as a type Y (type Y) route, or referred to as an IPv4 prefix compressed route (compressed route). In an example, a common information field in the advertisement NLRI includes a route distinguisher field, an ethernet segment identifier field, and an ethernet tag identifier field. Optionally, if the N pieces of NLRI all have a same gateway IP address, for example, the gateway IP address is used as a next hop to reach N destination ends corresponding to the N pieces of NLRI, the common information field further includes a gateway IP address field. To further describe the gateway IP address, optionally, the common information field further includes a gateway IP address length field. Optionally, because the gateway IP address is a prefix address, and a value of a length of the gateway IP address ranges from 0 to 32 bits, a quantity of bytes occupied by the gateway IP address is the same as a quantity of bytes occupied by an IP address, and both may be 4 bytes. Optionally, if a receive end of the advertisement NLRI (that is, a network device configured to receive an advertisement packet) does not learn the route type of the N pieces of NLRI and/or the transmission protocol followed by the N pieces of NLRI, the common information field further includes a route type field and/or a transmission protocol identifier field. Optionally, even if the receive end does not learn the transmission protocol followed by the N pieces of NLRI, the transmission protocol identifier field is not added to the common information field, and the transmission protocol followed by the N pieces of NLRI may be indicated by another field of a BGP route, or may be determined by the receive end based on a determined IP address length in the advertisement NLRI. Optionally, the common information field further includes a first length field and a second length field.

The advertisement NLRI does not reduce information that can be actually expressed by the N pieces of NLRI, but changes an encapsulation format, and reduces, by using the changed encapsulation format, an amount of data that needs to be transmitted. In a possible implementation, the advertisement NLRI includes a first part and a second part. Optionally, the first part and the second part are adjacent. A common information field of the first part includes a route type field, a first length field, a route distinguisher field, an ethernet segment identifier field, an ethernet tag identifier field, a gateway IP address length field, a gateway IP address field, and a second length field, which respectively occupy 1 byte, 1 byte, 8 bytes, 10 bytes, 4 bytes, 1 byte, 4 bytes, and 2 bytes. The first length field is used to indicate a total length of the common information field. The second part includes N private information fields, one private information field corresponds to one of the N pieces of NLRI, and the private information field includes a field other than the common information field in the NLRI corresponding to the private information field. For example, the private information field includes an IP prefix length field, an IP address field, and an MPLS label field, which respectively occupy 1 byte, 4 bytes, and 3 bytes. Optionally, an IP address stored in the IP address field is an IP prefix address, and a value of an IP prefix mask length of the IP prefix address ranges from 0 to 32 bits. For meanings of specific fields included in the common information field and the private information field, refer to the foregoing descriptions.

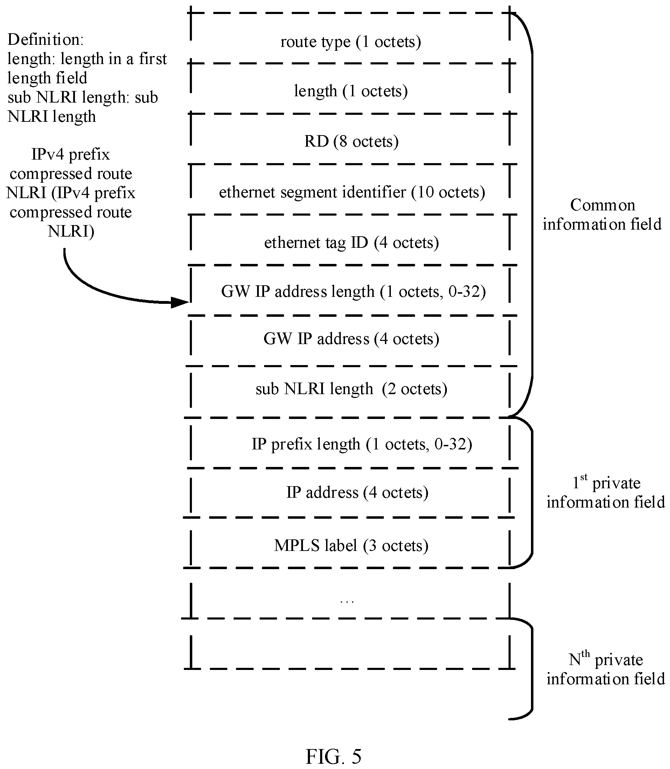

For example, FIG. 5 is a schematic diagram of an encapsulation format of IP prefix type advertisement NLRI following IPv4 according to an embodiment of this application. The N pieces of NLRI are all IP prefix type NLRI following IPv4 (as shown in FIG. 1). The N private information fields in the advertisement NLRI are sequentially located behind the common information field, and each private information field corresponds to one of the N pieces of IP prefix type NLRI following IPv4. It can be learned from FIG. 5 that a length of the common information field of the IP prefix type advertisement NLRI following IPv4 is 1+1+8+10+4+1+4+2=31 bytes, and a length of each private information field is 1+4+3=8 bytes. Therefore, a total length of the advertisement NLRI is (3 1+8N) bytes. It can be learned from FIG. 1 that, if an implementation solution without compression is used, a length of one piece of IP prefix type NLRI following IPv4 is 36 bytes, and a total length of the N pieces of IP prefix type NLRI following IPv4 is 36N bytes. When N is greater than or equal to 2, (31+8N)<36N, that is, when N is greater than or equal to 2, the total length of the advertisement NLRI is less than the total length of the N pieces of NLRI shown in FIG. 1, and the advertisement NLRI can carry all information that can be provided by the N pieces of NLRI shown in FIG. 1. Therefore, the advertisement NLRI can achieve an objective of compressing the NLRI shown in FIG. 1.

### Case 2. IP prefix type advertisement NLRI following IPv6

If N pieces of NLRI are all IP prefix type NLRI following IPv6 shown in FIG. 3, a network device uses IP prefix type advertisement NLRI following IPv6 to carry information in the N pieces of NLRI, to achieve an objective of compressing the N pieces of NLRI by using the advertisement NLRI. The same as naming in Case 1, the advertisement NLRI may be referred to as a type Y route, or referred to as an IPv6 prefix compressed route. In an example, a common information field in the advertisement NLRI includes a route distinguisher field, an ethernet segment identifier field, and an ethernet tag identifier field. Optionally, if the N pieces of NLRI all have a same gateway IP address, the common information field further includes a gateway IP address field. To further describe the gateway IP address, optionally, the common information field further includes a gateway IP address length field. Optionally, a value of a length of the gateway IP address ranges from 0 to 128 bits. Optionally, if a receive end of the advertisement NLRI does not learn the route type of the N pieces of NLRI and/or the transmission protocol followed by the N pieces of NLRI, the common information field further includes a route type field and/or a transmission protocol identifier field. Optionally, the common information field further includes a first length field and a second length field.

In a possible implementation, the advertisement NLRI includes a first part and a second part. Optionally, the first part and the second part are adjacent. A common information field of the first part includes a route type field, a first length field, a route distinguisher field, an ethernet segment identifier field, an ethernet tag identifier field, a gateway IP address length field, a gateway IP address field, and a second length field, which respectively occupy 1 byte, 1 byte, 8 bytes, 10 bytes, 4 bytes, 1 byte, and 16 bytes. The first length field is used to indicate a total length of the common information field. The second part includes N private information fields, one private information field corresponds to one of the N pieces of NLRI, and the private information field includes an IP prefix length field, an IP address field, and an MPLS label field, which respectively occupy 1 byte, 16 bytes, and 3 bytes. An IP address stored in the IP address field is an IP prefix address, and a value of an IP prefix mask length of the IP prefix address ranges from 0 to 128 bits. For meanings of specific fields included in the common information field and the private information field, refer to the foregoing descriptions.

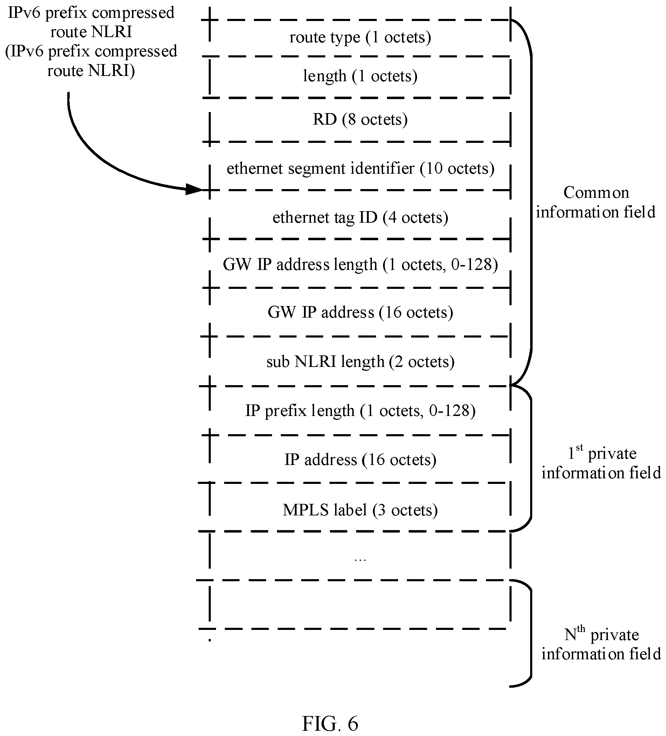

For example, FIG. 6 is a schematic diagram of an encapsulation format of IP prefix type advertisement NLRI following IPv6 according to an embodiment of this application. The N pieces of NLRI are all IP prefix type NLRI following IPv6 (as shown in FIG. 3). The N private information fields in the advertisement NLRI are sequentially located behind the common information field, and each private information field corresponds to one of the N pieces of IP prefix type NLRI following IPv6. It can be learned from FIG. 6 that a length of the common information field of the IP prefix type advertisement NLRI following IPv6 is 1+1+8+10+4+1+16+2=43 bytes, and a length of each private information field is 1+16+3=20 bytes. Therefore, a total length of the advertisement NLRI is (43+20N) bytes. It can be learned from FIG. 3 that, if an implementation solution without compression is used, a total length of one piece of IP prefix type NLRI following IPv6 is 60 bytes, and a total length of the N pieces of IP prefix type NLRI following IPv4 is 60N bytes. When N is greater than or equal to 2, (43+20N)<60N, that is, when N is greater than or equal to 2, the length of the advertisement NLRI is less than the total length of the N pieces of NLRI shown in FIG. 3, and the advertisement NLRI can carry all information that can be provided by the N pieces of NLRI shown in FIG. 3. Therefore, the advertisement NLRI can achieve an objective of compressing the NLRI shown in FIG. 3.

It should be noted that, for some particular services, the ethernet segment identifier and the ethernet tag identifier in the IP prefix type NLRI are fixed, and are already learned by the network device. Therefore, for the particular services, the common information field in the IP prefix type advertisement NLRI shown in Cases 1 and 2 may alternatively not include the ethernet segment identifier field and the ethernet tag identifier field.

### Case 3. MAC/IP advertisement type advertisement NLRI

If N pieces of NLRI are all MAC/IP advertisement type NLRI shown in FIG. 4, a network device uses MAC/IP advertisement type advertisement NLRI to carry information in the N pieces of NLRI, to achieve an obj ective of compressing the N pieces of NLRI by using the advertisement NLRI. The advertisement NLRI may be referred to as a type X (type X) route, or referred to as a MAC/IP compressed route. In an example, a common information field in the advertisement NLRI includes a route distinguisher field, an ethernet segment identifier field, and an ethernet tag identifier field. If a receive end of the advertisement NLRI does not learn the route type of the N pieces of NLRI, the common information field further includes a route type field. Optionally, the common information field further includes a first length field and a second length field.

In a possible implementation, the advertisement NLRI includes a first part and a second part. Optionally, the first part and the second part are adjacent. A common information field of the first part includes a route type field, a first length field, a route distinguisher field, an ethernet segment identifier field, an ethernet tag identifier field, and a second length field, which respectively occupy 1 byte, 1 byte, 8 bytes, 10 bytes, 4 bytes, and 2 bytes. The first length field is used to indicate a total length of the common information field. The second part includes N private information fields, one private information field corresponds to one of the N pieces of NLRI, and the private information field includes a MAC address field, a MAC address length field, an MPLS indication field, and an MPLS label 1 field. Because the MAC/IP advertisement type NLRI shown in FIG. 4 includes IP information in addition to MAC information, the private information field further includes an IP address length field, an IP address field, and an MPLS label 2 field. That is, the private information field includes a MAC address length field, a MAC address field, an IP address length field, an IP address field, an MPLS indication field, an MPLS label 1 field, and an MPLS label 2 field, which respectively occupy 1 byte, 6 bytes, 1 byte, a first byte quantity, 1 byte, 3 bytes, and a second byte quantity. For a design manner of the MPLS indication field in the MAC/IP advertisement type advertisement NLRI, refer to the four possible implementations of the field that are mentioned in the foregoing description. Alternatively, a corresponding MPLS label 1 length field and a corresponding MPLS label 2 length field may be respectively set for the MPLS label 1 field and the MPLS label 2 length field, and the MPLS label 1 length field and the MPLS label 2 length field may each occupy 1 byte, to respectively indicate lengths of bytes occupied by the MPLS label 1 field and the MPLS label 2 field. For example, when a field value of the MPLS label 2 length field is 0, it indicates that the current private information field does not carry an MPLS label 2 field. In this design manner, a length of an information part used to express an MPLS label is even longer than that in a solution without compression, but after other compressed fields are counted, an overall length of the advertisement NLRI is still shorter than that in the solution without compression, so that a final compression objective can be achieved.

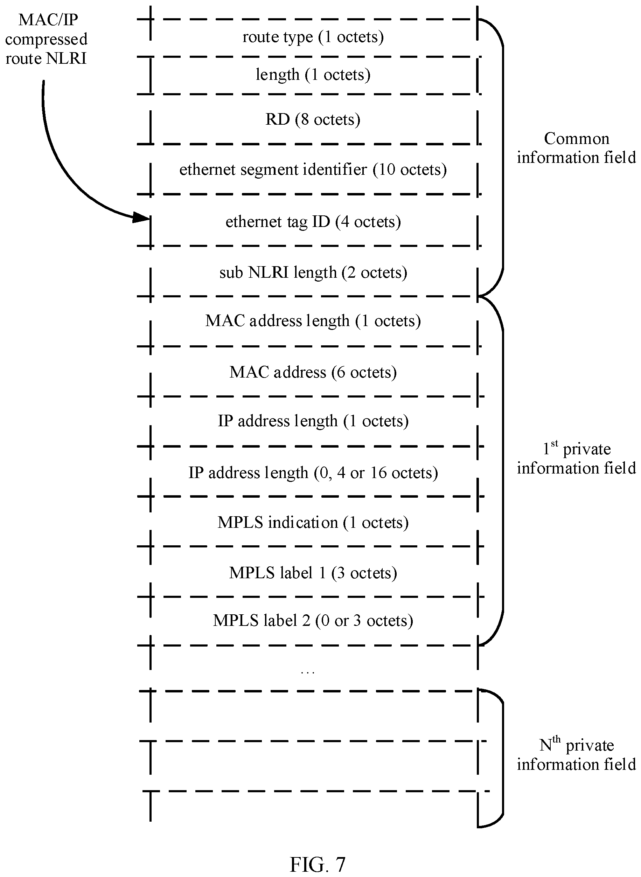

For example, FIG. 7 is a schematic diagram of an encapsulation format of MAC/IP advertisement type advertisement NLRI according to an embodiment of this application. The N pieces of NLRI are all MAC/IP advertisement type NLRI (as shown in FIG. 4). The N private information fields in the advertisement NLRI are sequentially located behind the common information field, and each private information field corresponds to one of the N pieces of MAC/IP advertisement type NLRI. It can be learned from the MAC/IP advertisement type NLRI shown in FIG. 7 that a total length of the common information field is 1+1+8+10+4+2=26 bytes. Because the NLRI in FIG. 4 carries different IP information and MAC information in different cases, and the NLRI in FIG. 4 has different fields, when the N pieces of MAC/IP advertisement type NLRI meet different cases, the advertisement NLRI also has different fields. The following describes the MAC/IP advertisement type advertisement NLRI in different cases (as shown in the following 3.1 to 3.5) met by the N pieces of MAC/IP advertisement type NLRI.

### 3.1. The N pieces of MAC/IP advertisement type NLRI all meet Case A

If the N pieces of NLRI all meet Case A, correspondingly, each private information field of the advertisement NLRI does not include the MPLS label 2 field or the IP address field, that is, both the MPLS label 2 field and the IP address field are 0 bytes. Therefore, a length of each private information field is 1+6+1+0+1+3+0=12 bytes. In this case, a total length of the MAC/IP advertisement type advertisement NLRI is (26+12N) bytes. For example, the MPLS indication field occupies 1 byte (which is also applicable to the following analytical descriptions for Cases B to E). It can be learned from FIG. 4 that, a total length of the NLRI shown in Case A is 35 bytes. Therefore, a total length of N pieces of NLRI shown in Case A is 35N bytes. If N is greater than or equal to 2, (26+12N)<35N. That is, the length of the advertisement NLRI is less than the total length of the N pieces of NLRI shown in Case A, and the advertisement NLRI can carry all information of the N pieces of NLRI shown in Case A. Therefore, the advertisement NLRI can achieve an objective of compressing the NLRI shown in Case A.

### 3.2. The N pieces of MAC/IP advertisement type NLRI all meet Case B

If the N pieces of NLRI all meet Case B, correspondingly, each private information field of the NLRI does not include the MPLS label 2 field, and includes the IP address field (occupying 4 bytes). Therefore, a length of each private information field is 1+6+1+4+1+3+0=16 bytes. In this case, a total length of the MAC/IP advertisement type advertisement NLRI is (26+16N) bytes. It can be learned from FIG. 4 that, a total length of the NLRI shown in Case B is 39 bytes. Therefore, a total length of N pieces of NLRI shown in Case B is 39N bytes. When N is greater than or equal to 2, (26+16N)<39N. That is, the length of the advertisement NLRI is less than the total length of the N pieces of NLRI shown in Case B, and the advertisement NLRI can carry all information of the N pieces of NLRI shown in Case B. Therefore, the advertisement NLRI can achieve an objective of compressing the NLRI shown in Case B.

### 3.3. The N pieces of MAC/IP advertisement type NLRI all meet Case C

If the plurality of pieces of NLRI all meet Case C, correspondingly, each private information field of the advertisement NLRI includes the MPLS label 2 field and the IP address field, which respectively occupy 3 bytes and 4 bytes. Therefore, a length of each private information field is 1+6+1+4+1+3+3=19 bytes. In this case, a total length of the MAC/IP advertisement type advertisement NLRI is (26+19N) bytes. A total length of N pieces of NLRI shown in Case C is 42N bytes. When N is greater than or equal to 2, (26+19N)<42N. That is, the length of the advertisement NLRI is less than the total length of the N pieces of NLRI shown in Case C, and the advertisement NLRI can carry all information of the N pieces of NLRI shown in Case C. Therefore, the advertisement NLRI can achieve an objective of compressing the NLRI shown in Case C.

### 3.4. The N pieces of MAC/IP advertisement type NLRI all meet Case D

If the plurality of pieces of NLRI all meet Case D, correspondingly, each private information field of the NLRI does not include the MPLS label 2 field, and includes the IP address field (occupying 16 bytes). Therefore, a length of each private information field is 1+6+1+16+1+3+0=28 bytes. In this case, a total length of the MAC/IP advertisement type advertisement NLRI is (26+28N) bytes. A total length of N pieces of NLRI shown in Case D is 51N bytes. When N is greater than or equal to 2, (26+28N)<51N. That is, the length of the advertisement NLRI is less than the total length of the N pieces of NLRI shown in Case D, and the advertisement NLRI can carry all information of the N pieces of NLRI shown in Case D. Therefore, the advertisement NLRI can achieve an objective of compressing the NLRI shown in Case D.

### 3.5. The N pieces of MAC/IP advertisement type NLRI all meet Case E

If the plurality of pieces of NLRI all meet Case E, correspondingly, each private information field of the NLRI includes the MPLS label 2 field and the IP address field, which respectively occupy 3 bytes and 16 bytes. Therefore, a length of each private information field is 1+6+1+16+1+3+3=31 bytes, and a total length of the MAC/IP advertisement type advertisement NLRI is (26+31N) bytes. A total length of N pieces of NLRI shown in Case 3E is 54N bytes. When N is greater than or equal to 2, (26+31N)<54N. That is, the length of the advertisement NLRI is less than the total length of the N pieces of NLRI shown in Case E, and the advertisement NLRI can carry all information of the N pieces of NLRI shown in Case E. Therefore, the advertisement NLRI can achieve an objective of compressing the NLRI shown in Case E.

Because the MAC address length field in the MAC/IP advertisement type NLRI in each case occupies 1 byte, in some cases, the common information field in the MAC/IP advertisement type advertisement NLRI further includes a MAC address field. Then, the private information field does not include the MAC address field. In addition, in Cases 3.1 to 3.5, compression efficiency is analyzed by using an example in which formats of fields carried in all the private information fields are the same. However, in actual application, field formats of the private information fields in the advertisement NLRI may alternatively be different. For example, some private information fields are in a format of Case A, while some other private information fields are in a format of Case B.

For a manner of determining whether parsing of a private information field is completed, in a possible implementation, because an MPLS indication field in the private information field is used to indicate an MPLS label field in the private information field, and the MPLS label field is located at an end of the private information field, the MPLS indication field may be used to indicate an end position of the private information field. When parsing a private information field in the advertisement NLRI subsequently, a network device may determine, based on an indication of the MPLS indication field, whether parsing of the private information field is completed. In another possible implementation, if a private information field does not include an MPLS indication field, but includes a third length field used to indicate a length of the private information field, the third length field is used to indicate an end position of the private information field. Therefore, when parsing a private information field in the advertisement NLRI subsequently, a network device may determine, based on an indication of the third length field, whether parsing of the private information field is completed.

In some possible cases, for example, the N pieces of NLRI are all MAC/IP advertisement type NLRI shown in FIG. 4, and lengths of bytes occupied by IP addresses included in the N pieces of NLRI before compression are not exactly the same. For example, some NLRI carries an IPv4 addresses (an IP address field occupies 4 bytes), some NLRI carries an IPv6 address (an IP address field occupies 16 bytes), and some NLRI does not carry an IP address (an IP address field occupies 0 bytes). Therefore, an IP address length field needs to be placed in a private information field corresponding to each of the N pieces of NLRI, to indicate a length of a byte occupied by an IP address carried in the corresponding private information field. In some other possible cases, lengths of bytes occupied by IP prefix mask lengths of IP addresses included in the N pieces of NLRI before compression are exactly the same. For example, if the N pieces of NLRI are all IPv4 prefix type NLRI shown in FIG. 1, and lengths of bytes occupied by IP prefix mask lengths of IP addresses in the N pieces of NLRI are the same (that is, IP prefix mask lengths stored in IP prefix length fields in the N pieces of NLRI are the same), for example, all are 8 bits, the common information field in the IPv4 prefix type NLRI may further include an IP prefix length field, while the private information field does not include an IP prefix length field. The IP prefix length field in the common information field may be used to indicate to parse out, based on a length, an IP prefix mask that matches an IP prefix address in the private information field. In another possible design, to further indicate that the NLRI follows IPv4, the common information field further includes a transmission protocol identifier field. In this case, the transmission protocol identifier field may be used to store an identifier indicating that the IPv4 protocol is followed.

Cases 1 to 3 are all described by using an example in which the common information field includes the first length field and the second length field, so that the total length of the advertisement NLRI can be represented by the total lengths indicated by the first length field and the second length field. In another possible implementation, for Cases 1 to 3, the common information field includes the first length field used to indicate the length of the common information field, but does not include the second length field, and the private information field includes a third length field used to indicate a length of the private information field, so that the total length of the advertisement NLRI can be represented by the total length indicated by the first length field and third length fields in the plurality of private information fields. In another possible implementation, for Cases 1 to 3, the common information field includes a fifth length field used to indicate the total length of the advertisement NLRI, and may further include the first length field or the second length field. In another possible implementation, another field length identification manner may alternatively be selected based on a requirement, to implement an objective of parsing each field of the advertisement NLRI.

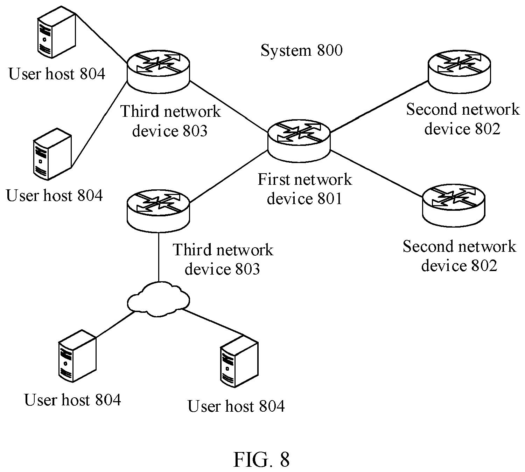

With reference to a specific embodiment, the following describes a process of compressing, by using advertisement NLRI, a plurality of pieces of NLRI implemented in a conventional manner. FIG. 8 is a schematic diagram of a packet transmission system according to an embodiment of this application. Referring to FIG. 8, the system 800 may include a first network device 801, a plurality of second network devices 802, a plurality of third network devices 803, and a plurality of user hosts 804. In the system 800, the first network device 801 and the plurality of second network devices 802 may be devices in an EVPN network environment, and the plurality of third network devices 803 may each communicate with the first network device 801, and send a route to the first network device 801. Based on different service scenario requirements, the third network device 803 may send a route to the first network device 801 based on various possible protocols, for example, an IP protocol, an address resolution protocol (address resolution protocol, ARP) protocol, or an interior gateway protocol (internet gateway protocol, IGP) protocol. The route sent by the third network device 803 may be a route of a user-side device, for example, a route of the user host 804 connected to the first network device 803, or may be a route of the third network device 803, or a route of a user-side network device or another network-side network device connected to the third network device 803. A type of the sent route may include a specific route or an aggregated route based on different scenario requirements, service configuration, or device behavior. The specific route is used to advertise a route reachable destination device, for example, a user host. The specific route may carry a MAC or IP address of the destination device. The aggregated route is used to advertise a route reachable destination network, and a service packet may finally reach one or more destination devices by using the destination network. The aggregated route may carry an IP network segment address.

The first network device 801 is configured to receive a plurality of routes (for example, including specific routes and/or aggregated routes) from the plurality of third network devices 803, and update a local routing table based on routing information carried in the plurality of received routes, so that the first network device 801 subsequently forwards a service packet based on the routing information recorded in the local routing table. In a possible implementation, for a plurality of specific routes in the plurality of received routes, the first network device 801 aggregates the plurality of specific routes into an aggregated route, and updates the local routing table based on routing information in the aggregated route obtained after the aggregation.

The first network device 801 is further configured to store the plurality of routes into a local routing and forwarding table, or store, into a local routing and forwarding table, the routing information obtained based on the plurality of routes. The first network device 801 may advertise, based on the compressed NLRI encapsulation format provided in the embodiments of this application, the routing information carried in the plurality of routes. In a possible implementation, for any one of the plurality of routes, the first network device 801 generates, based on routing information carried in the any route, a piece of NLRI corresponding to a destination end, and locally stores the piece of NLRI corresponding to the destination end. The piece of NLRI corresponding to the destination end may be any NLRI shown in FIG. 1 to FIG. 4. The destination end is a destination device identified by a MAC or IP address carried in the any route, or the destination end is a destination network identified by an IP network segment address carried in the any route. After generating a plurality of pieces of NLRI corresponding to a plurality of destination ends, the first network device 801 may send advertisement NLRI to an external network device based on the compressed NLRI encapsulation format provided in the embodiments of this application. In another possible implementation, the first network device 801 may alternatively directly generate the advertisement NLRI based on the compression rule provided in the embodiments of this application, without first generating the plurality of pieces of NLRI corresponding to the plurality of routes before compression, and then generating the advertisement NLRI by compression based on the plurality of pieces of NLRI.

In a possible implementation, the first network device 801 considers routes that have a same route distinguisher, ethernet segment identifier, ethernet tag identifier, and route type in the plurality of routes as a type of routes. For any type of routes, the first network device 801 directly generates, based on routing information carried in a plurality of routes in the any type of routes, a piece of advertisement NLRI corresponding to a plurality of destination ends, and locally stores the piece of advertisement NLRI corresponding to the plurality of destination ends. The piece of advertisement NLRI corresponding to the plurality of destination ends may be any advertisement NLRI shown in FIG. 5 to FIG. 7, and the plurality of destination ends are destination devices identified by MAC or IP addresses carried in the plurality of routes in the any type of routes, or destination networks identified by carried IP network segment addresses. In another possible implementation, after the first network device 801 generates the plurality of pieces of NLRI based on the plurality of received routes, the first network device 801 considers routes that have a same route distinguisher, ethernet segment identifier, ethernet tag identifier, and route type in the plurality of pieces of generated NLRI as a type of NLRI. For any type of NLRI, the first network device 801 compresses a plurality of pieces of NLRI in the any type of NLRI into a piece of advertisement NLRI corresponding to a plurality of destination ends. In this case, the plurality of destination ends are a plurality of destination ends corresponding to the plurality of pieces of NLRI in the any type of NLRI.

The first network device 801 is further configured to encapsulate at least one piece of advertisement NLRI into an advertisement packet, and send the advertisement packet to one or more second network devices 802, to advertise, to the second network device 802, routing information of a plurality of destination ends corresponding to each of the at least one piece of advertisement NLRI in the advertisement packet. That is, one advertisement packet may carry one or more pieces of advertisement NLRI generated by compression. Optionally, the advertisement packet is a BGP packet, and the at least one piece of advertisement NLRI in the advertisement packet is located in a route that is used by the BGP packet to advertise MAC/IP addresses of the plurality of destination ends. Alternatively, the at least one piece of advertisement NLRI is located in a route that is used by the BGP packet to advertise IP prefix addresses of the plurality of destination ends. In addition to the advertisement NLRI, the advertisement packet may include BGP attribute information, such as an autonomous system-path (autonomous system-path, AS-path), a next hop (next hop), and an origin (origin).

Because each piece of advertisement NLRI in the advertisement packet carries all routing information that can be provided by a plurality of pieces of NLRI, that is, the advertisement NLRI does not reduce the information that can be actually expressed by the plurality of pieces of NLRI, but changes an encapsulation format, when the first network device 801 sends the advertisement packet to the second network device 802, all the routing information that can be provided by the plurality of pieces of NLRI can be conveyed to the second network device 802. In addition, because each piece of advertisement NLRI in the advertisement packet can achieve an objective of compressing the plurality of pieces of NLRI, compared with an NLRI advertisement format in an existing BGP packet, the advertisement packet can carry routing information of more NLRI, thereby improving NLRI advertisement efficiency and transmission efficiency.

Optionally, each of the first network device 801 and the second network device 802 is one of a PE device, a route reflector, or an autonomous system boundary router (autonomous system border router, ASBR). The third network device 803 may be a customer edge (customer edge, CE) device.

Each second network device 802 is configured to receive the advertisement packet from the first network device 801. In a possible implementation, the second network device 802 parses out the advertisement NLRI from the received advertisement packet, and directly stores the advertisement NLRI for subsequent use. In a possible implementation, the second network device 802 restores and generates a plurality of pieces of corresponding NLRI based on the advertisement NLRI parsed out. The plurality of pieces of NLRI are a plurality of pieces of NLRI used when the first network device 802 performs a compression operation to obtain the advertisement NLRI. Then, the second network device 802 stores the plurality of pieces of restored NLRI. Alternatively, in another possible implementation, the second network device 802 may directly determine and generate the plurality of pieces of corresponding NLRI when parsing the advertisement packet, without first obtaining the advertisement NLRI by parsing. In a possible implementation, the second network device 802 may further update a local routing table based on routing information carried in the plurality of pieces of NLRI or the advertisement NLRI, so that the second network device 802 subsequently forwards a service packet based on the routing information recorded in the local routing table.

The second network device 802 may further encapsulate the plurality of pieces of restored NLRI into a packet and send the packet to a neighboring device, for example, a neighboring device that does not support parsing of the advertisement NLRI. Alternatively, the second network device 802 processes the plurality of pieces of restored NLRI and one or more pieces of other obtained NLRI together based on a local service principle, for example, directly encapsulates the NLRI or encapsulates the NLRI based on the method provided in the foregoing embodiment, adds the NLRI to a packet, and sends the packet to the neighboring device. Alternatively, the second network device 802 may not perform any operation on the advertisement packet sent by the first network device 801, but directly forward the advertisement packet to the neighboring device.

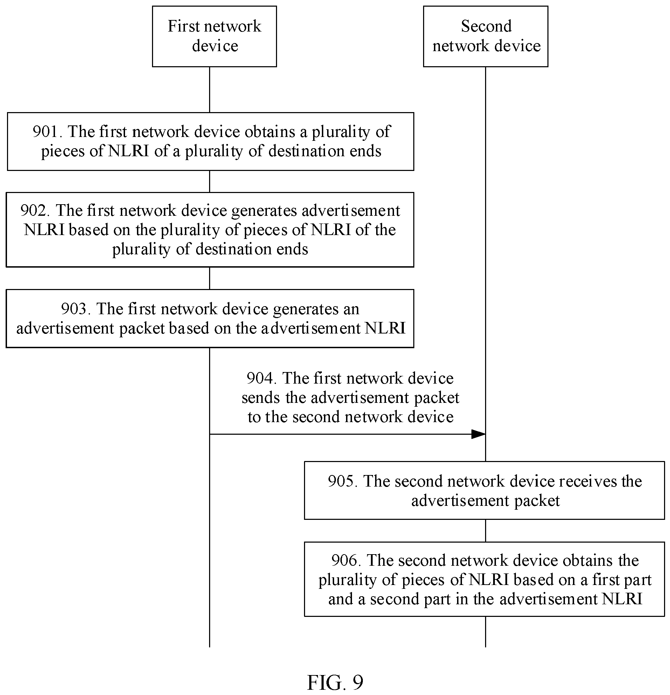

To further describe a process in which the first network device compresses a plurality of pieces of NLRI into a piece of advertisement NLRI, and transmits the advertisement NLRI to the second network device, refer to a flowchart, shown in FIG. 9, of a network layer reachable information transmission method according to an embodiment of this application.

901. The first network device obtains a plurality of pieces of NLRI of a plurality of destination ends.

A destination end may be a destination network or a destination device that a packet needs to reach, and the packet may be a data packet. The destination device may be a user host, or may be a network device, for example, a gateway or a switch. The destination network may be identified by a network segment address, to indicate the packet to reach one or more user hosts or network devices in the destination network based on an identifier of the network segment address. The network segment address may be an IP network segment address. The plurality of pieces of NLRI are any NLRI shown in FIG. 1 to FIG. 4. In a possible implementation, the process shown in step 901 may be implemented by performing the following steps S11 to S13.

Step S11: The first network device obtains R pieces of routing information carried in R (R≥1) routes advertised by a third network device.

The R routes may come from a same third network device, or may come from different third network devices. Each route carries corresponding routing information. A format of the routing information carried in the routes sent by the third network device may vary with a service carried by the third network device. For example, when the third network device is a route reflector in an EVPN network, the R routes sent by the third network device to the first network device may be BGP routes, and BGP attribute information is carried in the routes as a part of routing information. When the third network device is a user-side network device used by a user to access a network, the R routes sent by the third network device to the first network device may be IP routes or routes following another protocol. In this case, if the R routes follow another protocol, the R routes may not carry BGP attribute information. The routes of another protocol are, for example, non-BGP routes such as a static route, a direct route, a routing information protocol (routing information protocol, RIP) route, an open shortest path first (open shortest path first, OSPF) route, or an intermediate system-to-intermediate system (intermediate system-to-intermediate system, ISIS) route. The routes sent by the third network device may be used to advertise address information of destination devices or destination networks.

Step S12: The first network device determines a plurality of pieces of routing information of the plurality of destination ends based on the R pieces of routing information. One destination end corresponds to one piece of routing information.

For example, the R pieces of routing information are BGP EVPN routing information. Then, the R pieces of routing information include R pieces of BGP attribute information. When T of the R pieces of BGP attribute information are the same, the first network device may consider T routes to which the T pieces of BGP attribute information belong as a type of routes, and compress, based on the same BGP attribute information, T pieces of corresponding NLRI used to advertise the T routes, so that a piece of advertisement NLRI is subsequently generated based on the T pieces of NLRI of T destination ends. In this case, the T pieces of NLRI corresponding to the T destination ends are the plurality of pieces of NLRI, described in 901, of the plurality of destination ends. The BGP attribute information may include an autonomous domain (autonomous system, AS), a next hop, an extended community attribute, and the like.

To further improve compression efficiency, in a possible implementation, after determining the T routes that have the same BGP attribute information, the first network device may perform further filtering based on T pieces of routing information carried in the T routes. For example, the first network device determines S (1≤S≤T) pieces of routing information from the T pieces of routing information. The S pieces of routing information have a plurality of pieces of same field content. For example, S piece of routing information having a same route distinguisher, ethernet segment identifier, ethernet tag identifier, and route type are determined as a type of routes. In this case, the S pieces of NLRI corresponding to S destination ends are the plurality of pieces of NLRI, described in 901, of the plurality of destination ends.

In the foregoing example, the R pieces of routing information are BGP EVPN routing information. In another possible case, because the R pieces of routing information do not follow a BGP protocol format, the R pieces of routing information may not include content such as a route distinguisher or an ethernet segment identifier. In this case, the first network device may first fill content of some fields in the NLRI based on content included in the R pieces of routing information and an NLRI generation format. For example, when the R pieces of routing information do not include a route distinguisher or an ethernet segment identifier, a route distinguisher field and an ethernet segment identifier field in the NLRI are filled with default values, to obtain R pieces of NLRI corresponding to the R pieces of routing information. In this way, because some fields of the R pieces of NLRI have the same filled default values, the compression solution provided in this embodiment of this application may be applied.

In a possible implementation, the first network device may filter and classify the R pieces of routing information based on a route advertisement level of a service. The route advertisement level may include at least a first level and a second level. The first level is used to indicate that routing information corresponding to a service is directly sent without compression. For example, for some services, a quantity of destination ends is relatively small or an amount of routing information advertised by the destination ends is relatively small, so that a compression effect is limited while compression costs are relatively high. Therefore, route advertisement levels of the services may be the first level. The second level is used to indicate to compress and send routing information corresponding to a service. For example, for some services, a quantity of destination ends is relatively large or an amount of routing information advertised by the destination ends is relatively large, so that directly sending the routing information without compression significantly affects packet sending efficiency. Therefore, route advertisement levels of the services may be the second level. Then, for routing information determined to be at the second level, the first network device may further filter, with reference to another filtering method, such as the rule described in the foregoing part of S12, the routing information at the second level before compression.

In a possible implementation, the first network device may first integrate some of the R pieces of received routing information, to obtain a piece of integrated routing information, and use the integrated routing information as an object to participate in classification and filtering of routing information before compression. For example, the first network device is a network device with an aggregation capability. After receiving the plurality of routes, the first network device finds that the plurality of routes all come from a same third network device that serves as a user-side network device. Then, the first network device may aggregate routing information carried in the plurality of routes, and generate an aggregated route, to reduce a quantity of local stored routes and save route advertisement resources. In this case, the aggregated route actually corresponds to a destination end of a destination network type.

Step S13: The first network device obtains, based on the routing information of the plurality of destination ends, the plurality of pieces of NLRI corresponding to the plurality of destination ends.

The first network device determines, by performing S11 and S12, the plurality of pieces of routing information from the R pieces of received routing information, respectively corresponding to the plurality of destination ends (for example, destination networks or destination devices). The plurality of pieces of routing information are information that is determined by the first network device by using the local rule and that is used to be packaged into a packet in an NLRI format for route advertisement. The first network device generates a plurality of pieces of corresponding NLRI based on the plurality of pieces of routing information. For example, the first network device may generate IP prefix type NLRI of the plurality of destination ends based on the plurality of pieces of routing information, as shown in FIG. 1 or FIG. 3. For another example, the first network device may generate MAC/IP advertisement type NLRI of the plurality of destination ends based on the plurality of pieces of routing information, as shown in FIG. 4.

902. The first network device generates advertisement NLRI based on the plurality of pieces of NLRI of the plurality of destination ends. The advertisement NLRI includes a first part and a second part, the first part includes a common information field corresponding to the plurality of destination ends, the common information field includes same information in the plurality of pieces of NLRI, the second part includes a plurality of private information fields respectively corresponding to the plurality of destination ends, and one private information field includes information in one piece of NLRI other than the same information.

The first network device determines the common information field in the advertisement NLRI based on some or all fields that have same content in the plurality of pieces of NLRI, and then adds information in each piece of NLRI other than the information in the common information field to a private information field.

For example, a process in which the first network device determines the common information field in the advertisement NLRI based on some or all fields that have same content in the plurality of pieces of NLRI may include: If route types of the plurality of pieces of NLRI are an IP prefix type, the first network device respectively adds a same type identifier, route distinguisher, ethernet segment identifier, ethernet tag identifier, and gateway IP address in the plurality of pieces of NLRI to a route type field, a route distinguisher field, an ethernet segment identifier field, an ethernet tag identifier field, and a gateway IP address field in the common information field, and the first network device adds a length of a byte occupied by the gateway IP address to a gateway IP address length field of the common information field. If the route types of the plurality of pieces of NLRI are a MAC/IP advertisement type, the first network device respectively adds a same type identifier, route distinguisher, ethernet segment identifier, and ethernet tag identifier in the plurality of pieces of NLRI to a route type field, a route distinguisher field, an ethernet segment identifier field, and an ethernet tag identifier field of the common information field.

For one of the plurality of pieces of NLRI, a process in which the first network device adds information in the piece of NLRI other than the information in the common information field to a private information field may include: If a route type of the one piece of NLRI is an IP prefix type, the first network device respectively adds an IP address and an MPLS label 2 in the piece of NLRI to an IP prefix address field and an MPLS label field of the private information field, and adds an IP prefix mask length corresponding to the IP prefix address to an IP prefix length field of the private information field. If the route type of the piece of NLRI is a MAC/IP advertisement type, the first network device respectively adds a MAC address and an MPLS label 1 in the piece of NLRI to a MAC address field and an MPLS label 1 field of the private information field, and adds a length of the MAC address to a MAC address length field of the private information field. If the piece of NLRI has an IP address, the first network device adds the IP address to an IP address field of the private information field, and adds, to an IP address length field of the private information field, a length of a byte occupied by the IP address. If the piece of NLRI further has an MPLS label 2, the first network device adds the MPLS label 2 to an MPLS label 2 field of the private information field. Finally, the first network device adds indication information (for example, a quantity of MPLS label fields in the private information field) to an MPLS indication field of the private information field, to indicate the MPLS label fields in the private information field.

After the first network device obtains the common information field and the plurality of private information fields, the first network device sequentially adds the plurality of private information fields behind the common information field, to obtain the advertisement NLRI. Then, the first network device may count a total length of the common information field and a total length of the plurality of private information fields. If the common information field includes a first length field and a second length field, the first network device adds the total length of the common information field to the first length field, and adds the total length of the plurality of private information fields to the second length field in the common information field. If the common information field includes the first length field and does not include the second length field, the first network device determines a sum of the total length of the common information field and the total length of the plurality of private information fields as a total length of the advertisement NLRI, and adds the total length of the advertisement NLRI to the first length field.

In some possible implementations, if the route type in the piece of NLRI is the IP prefix type, each private information field may not include an MPLS indication field, but include a third length field, and the first network device adds, to a third length field of each private information field, a length of the private information field.

For example, if the plurality of pieces of NLRI are all IP prefix type NLRI following IPv4 shown in FIG. 1, the advertisement NLRI may be the advertisement NLRI shown in FIG. 5. If the plurality of pieces of NLRI are all IP prefix type NLRI following IPv6 shown in FIG. 3, the advertisement NLRI may be the advertisement NLRI shown in FIG. 6. If the plurality of pieces of NLRI are all MAC/IP advertisement type NLRI shown in FIG. 4, and the plurality of pieces of NLRI meet any one of Cases A to E, the advertisement NLRI may be the advertisement NLRI corresponding to any one of Cases 3.1 to 3.5.

In a possible implementation, after the first network device obtains the advertisement NLRI, the first network device may further store the advertisement NLRI, so that the first network device can subsequently restore a piece of NLRI of a destination end based on the common information field and a private information field in the advertisement NLRI.

In a possible implementation, when storing the advertisement NLRI, the first network device can perform hierarchical storage on the common information field and the plurality of private information fields in the advertisement NLRI. Optionally, the first network device stores the common information field in the advertisement NLRI into a first-level file, and stores the plurality of private information fields into one or more second-level files, and each second-level file is used as a subfile of the first-level file. Optionally, the first network device forms an information tree based on the common information field and the plurality of private information fields in the advertisement NLRI, the common information field is a root node of the information tree, and each private information field is a leaf node of the information tree.

In a possible implementation, the first network device may alternatively directly store the plurality of pieces of NLRI.

The process described in steps 901 and 902 is a process in which the first network device first obtains the plurality of pieces of NLRI of the plurality of destination ends, and then compresses the plurality of pieces of NLRI into one piece of advertisement NLRI. In another possible manner, after the first network device obtains the plurality of pieces of routing information corresponding to the plurality of destination ends (that is, step S12), the first network device does not need to generate the plurality of pieces of NLRI corresponding to the plurality of destination ends (that is, does not need to perform step S13), but instead, directly extracts, based on the plurality of pieces of routing information, common information required by the common information field of the advertisement NLRI, and adds the extracted common information to a corresponding field in the common information field. For example, the first network device extracts a type identifier from the plurality of pieces of routing information, and adds the extracted route type identifier to a route type field of the common information field. The first network device extracts private information of each destination end from routing information corresponding to each destination end, and adds the extracted private information of each destination end to a corresponding field in a private information field corresponding to each destination end. For example, the first network device extracts a MAC address from routing information of a destination end, and adds the extracted MAC address to a MAC address field in a private information field corresponding to the destination end. After the first network device adds corresponding common information to the common information field, and adds corresponding private information to the private information field corresponding to each destination end, the first network device sequentially adds the private information field corresponding to each destination end behind the common information field, to obtain the advertisement NLRI.

903. The first network device generates an advertisement packet based on the advertisement NLRI.

The advertisement packet may be a BGP packet, and the advertisement NLRI may be located in a MAC/IP advertisement route that is used by the BGP packet to advertise MAC/IP addresses of the plurality of destination ends. Alternatively, the at least one piece of advertisement NLRI may be located in an IP prefix route that is used by the BGP packet to advertise IP prefix addresses of the plurality of destination ends.

After the first network device adds the advertisement NLRI to the BGP packet, if a total data amount of the advertisement NLRI does not reach a maximum data amount of a route that can be carried in the BGP packet, the first network device may further add other advertisement NLRI to the BGP packet, until a total data amount of advertisement NLRI in a compression format that is added to the BGP packet reaches or nearly reaches the maximum data amount of the route of the BGP packet, then stops adding other advertisement NLRI to the BGP packet, and obtains the advertisement packet. In other words, the advertisement packet generated in this case includes a plurality of pieces of advertisement NLRI in a compression format. Each piece of advertisement NLRI may be obtained by compression from a plurality of pieces of NLRI with a same BGP attribute.

904. The first network device sends the advertisement packet to a second network device.

905. The second network device receives the advertisement packet.

906. The second network device obtains the plurality of pieces of NLRI based on the first part and the second part in the advertisement NLRI.

After receiving the advertisement packet, the second network device may remove a packet header of the advertisement packet, and obtain, by parsing, the advertisement NLRI part included in the advertisement packet.

For example, a route type of the advertisement NLRI is the IP prefix type. The first network device reads the first piece of advertisement NLRI by starting from a start position of the advertisement NLRI. The first network device extracts a type identifier from 1 byte counted from the start position, and determines that the type identifier indicates that a route type of the advertisement NLRI is the IP prefix type. Based on distribution of each field in a common information field in the advertisement NLRI and a byte occupied by each field in the common information field in the advertisement NLRI, the first network device sequentially reads a length in a first length field, a route distinguisher in a route distinguisher field, an ethernet segment identifier in an ethernet segment identifier field, an ethernet segment tag identifier in an ethernet segment tag identifier field, and a gateway IP address length in a gateway IP address length field behind the route type identifier field, and reads a gateway IP address in a gateway IP address field behind the gateway IP address length field based on the gateway IP address length. After the second network device reads the gateway IP address, parsing of the common information field is completed.

In a possible specific case, if the first length field occupies 2 bytes, a length stored in the first length field is a total length of the advertisement NLRI.

In another possible specific case, if the first length field occupies 1 byte, the second network device further reads 2 bytes behind the gateway IP address field, to obtain a total length, stored in a second length field, of private information fields in the advertisement NLRI, and determines a sum of the length in the second length field and the length in the first length field as a total length of the advertisement NLRI. If bytes occupied from an end position of the second length field to the start position of the advertisement NLRI are the total length, in the first length field, of the common information field, the end position of the second length field is also an end position of the common information field, and parsing of the common information field is completed.

After parsing the common information field, the second network device reads the first private information field in the advertisement NLRI by starting from the end position of the common information field. For example, the second network device further reads 1 byte behind the end position of the common information field, to obtain an IP prefix mask length of an IP address in an IP prefix length field, and reads the IP address from an IP address field behind the IP prefix length field based on the read IP prefix mask length. Then, 3 bytes are further read behind the IP address field, to obtain an MPLS label in an MPLS label field, to complete parsing of the first private information field. If a total length of private information fields currently parsed out and the common information field is less than the total length of the advertisement NLRI, it indicates that there is another private information field to be parsed in the advertisement NLRI, and the second network device further parses a next private information field, until a total length of private information fields parsed out and the common information field is equal to the total length of the advertisement NLRI. So far, parsing of the advertisement NLRI is completed.

In the process of parsing the advertisement NLRI, a process in which the second network device determines, based on the length stored in the first length field and the length stored in the second length field, whether parsing of the common information field and each private information field in the advertisement NLRI is completed is a process in which the second network device parses the common information field of the first part and the plurality of private information fields of the second part based on the first length field and the second length field, to obtain the plurality of pieces of routing information corresponding to the plurality of destination ends, that is, a process in which the second network device parses the common information field of the first part based on the first length field, to obtain the plurality of pieces of routing information corresponding to the plurality of destination ends.

In some possible implementations, the common information field of the advertisement NLRI does not include the second length field, but each of the plurality of private information fields includes a third length field. After parsing the common information field, the second network device reads the first private information field in the advertisement NLRI by starting from the end position of the common information field. The second network device further reads 1 byte behind the end position of the common information field, to obtain a length, in a third length field, of the first private information field. A position indicated from a start position of the third length field to the length of the first private information field is an end position of the first private information field. After the second network device completes reading the data before the end position of the first private information field, parsing of the first private information field is completed. Then, the second network device may parse another private information field with reference to the process of parsing the first private information field, that is, a process in which the second network device parses the plurality of private information fields based on the plurality of third length fields, to obtain the plurality of pieces of routing information corresponding to the plurality of destination ends. If a total length of private information fields currently parsed out and the common information field is less than the total length, in the first length field, of the advertisement NLRI, it indicates that there is another private information field to be parsed in the advertisement NLRI, and the second network device further parses a next private information field, until a total length of private information fields parsed out and the common information field is equal to the total length, in the first length field, of the advertisement NLRI. So far, parsing of the advertisement NLRI is completed. That is, the process is a process in which the second network device parses the common information field of the first part and the plurality of private information fields of the second part based on the first length field and the plurality of third length fields, to obtain the plurality of pieces of routing information corresponding to the plurality of destination ends.

After parsing of the first piece of advertisement NLRI is completed, if the second network device determines that there is other data not parsed in a payload part, it indicates that there is still advertisement NLRI not parsed in the payload part, and the second network device further parses the second piece of advertisement NLRI in the foregoing manner of parsing the first piece of advertisement NLRI, until parsing of all the plurality of pieces of advertisement NLRI carried in the advertisement packet are completed. A plurality of pieces of advertisement NLRI carried in one advertisement packet may use different compression formats.

Compression formats of advertisement NLRI of different route types may be different. After determining a type identifier in a route type field of a piece of advertisement NLRI, the second network device may parse the advertisement NLRI based on a compression format of advertisement NLRI of a route type indicated by the type identifier, to obtain routing information of a plurality of destination ends, that is, a process in which the second network device determines, based on the route type field included in the advertisement packet, to obtain, based on the first part and the second part, the plurality of pieces of routing information corresponding to the plurality of destination ends.

After parsing the advertisement packet, the second network device may store one or more pieces of obtained advertisement NLRI in the advertisement packet, so that the second network device can subsequently restore a piece of NLRI of a destination end based on a common information field and a private information field in the advertisement NLRI. Alternatively, for one piece of advertisement NLRI parsed out, the second network device restores, based on a common information field and a plurality of private information fields that are parsed out, a plurality of pieces of complete NLRI corresponding to a plurality of destination ends, and locally stores the plurality of pieces of complete NLRI.

The foregoing uses an example in which the second network device first parses the advertisement NLRI, and then restores the plurality of pieces of NLRI based on a common information part and a plurality of private information parts of the advertisement NLRI. In another possible implementation, alternatively, the second network device may directly obtain, during parsing, the plurality of pieces of complete NLRI sequentially based on the common information field and the plurality of private information fields that are sequentially obtained by parsing, without first determining the entire advertisement NLRI.

The process in which the second network device parses the advertisement NLRI is a process in which the second network device obtains, based on the first part and the second part of the advertisement packet, the plurality of pieces of routing information corresponding to the plurality of destination ends.

By performing the solution provided in this embodiment of this application, the first network device can improve route advertisement efficiency. For example, a quantity of a plurality of pieces of NLRI before compression is N, a length of a packet used to send the NLRI is 4096 bytes, 96 bytes are used to carry non-advertisement NLRI, and 4000 bytes are used to carry advertisement NLRI. The following comparison is made between transmission efficiency of sending a packet by using the solution in this embodiment of this application and that of sending a packet by using a conventional technology:

For example, if the N pieces of NLRI are all IP prefix type NLRI following IPv4 shown in FIG. 1, and the N pieces of NLRI are compressed in the advertisement NLRI format shown in FIG. 5, a length of a common information field in advertisement NLRI is 31 bytes, and a length of each private information field is 8 bytes, that is, a total length of the advertisement NLRI is (31+8N) bytes. In this way, a packet sent in the advertisement NLRI format may carry a maximum of 496 (N=496) NLRI private information fields in the packet, which is equivalent to advertising routing information that can be expressed by 496 pieces of NLRI before compression. However, if an existing manner is used, a maximum of 111 pieces of IP prefix type NLRI following IPv4 can be carried. It can be learned that transmission efficiency of sending NLRI by using the solution provided in this embodiment of this application is approximately five times transmission efficiency of the existing manner. Therefore, the first network device can improve NLRI transmission efficiency by transmitting the advertisement packet.

For another example, if the N pieces of NLRI are all MAC/IP advertisement type NLRI and meet Case A, and compressed advertisement NLRI is the advertisement NLRI analyzed in 3.1, a length of a common information field in the advertisement NLRI is 26 bytes, and a length of each private information field is 11 bytes, that is, a total length of the advertisement NLRI is (26+12N) bytes. In this way, a packet sent in the advertisement NLRI format may carry a maximum of 311 (N=311) NLRI private information fields in the packet, which is equivalent to advertising routing information that can be expressed by 311 pieces of NLRI before compression. However, if an existing manner is used, a maximum of 114 pieces of MAC/IP advertisement type NLRI can be carried. It can be learned that transmission efficiency of sending NLRI by using the solution provided in this embodiment of this application is approximately three times transmission efficiency of the existing manner. Therefore, the first network device can improve NLRI transmission efficiency by transmitting the advertisement packet.

In a possible implementation, when a plurality of pieces of NLRI before compression do not meet a preset compression condition, for example, except for a route type, none of the plurality of pieces of NLRI include other common fields with same content, or in some cases in which compression efficiency is not significantly improved, while resources are inevitably consumed when a sender performs compression and a receiver performs decompression, so that overall network running costs cannot be significantly reduced, or in other cases, the first network device may not perform the compression solution provided in this embodiment of this application, but instead, directly add the plurality of pieces of NLRI to a packet for sending.

The first network device as a transmit device may advertise a plurality of pieces of NLRI of a plurality of destination ends by using a first part and a second part in a predetermined format, the second part includes a plurality of private information fields, and the plurality of private information fields are all associated with a common information field included in the first part, to implement compression and sending of information used to advertise the plurality of pieces of NLRI. A receive device may determine, based on the compressed first part and second part, the plurality of pieces of corresponding NLRI to support a service. The method provided in this embodiment of this application can improve efficiency of advertising a route and transmitting the advertised route in a network by the first network device without affecting normal running of a service, and save network running resources. The receive device (that is, the second network device) may determine, based on the compressed advertisement NLRI, the plurality of pieces of corresponding NLRI to support a service. With the method provided in this embodiment of this application, efficiency of advertising routes by the transmit device can be improved without affecting normal running of a service, and network running resources can be saved.

The foregoing describes the method in the embodiments of this application, and the following describes an apparatus in the embodiments of this application. It should be understood that the apparatus described below has any function of the first network device or the second network device in the foregoing method.

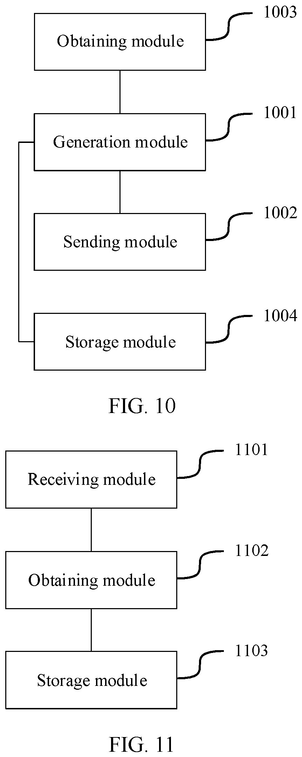

FIG. 10 is a schematic diagram of a structure of a network layer reachable information transmission apparatus according to an embodiment of this application. The apparatus 1000 includes:
a generation module 1001, configured to generate an advertisement packet; and
a sending module 1002, which may be configured to perform step 904.

Optionally, the generation module 1001 may be configured to perform steps 902 and 903.

Optionally, the apparatus 1000 further includes an obtaining module 1003, which may be configured to perform step 901.

Optionally, the apparatus 1000 further includes a storage module 1004, which may be configured to store the first part and the second part or store the plurality of pieces of NLRI.

It should be understood that the apparatus 1000 corresponds to the first network device in the foregoing method embodiments, and the modules and the foregoing other operations and/or functions in the apparatus 1000 are respectively used to implement steps and methods performed by the first network device in the method embodiments. For specific details, refer to the foregoing method embodiments. For brevity, details are not described herein again.

It should be understood that, when the apparatus 1000 generates the advertisement packet and transmits the advertisement packet, division of the foregoing function modules is merely used for illustration. In actual application, the foregoing functions can be allocated to and implemented by different function modules based on a requirement, that is, an internal structure of the apparatus 1000 is divided into different function modules to implement all or some of the functions described above. In addition, the apparatus 1000 provided in the foregoing embodiment and the foregoing method embodiments belong to a same concept. For a specific implementation process of the apparatus, refer to the foregoing method embodiments. Details are not described herein again.

It should be understood that the apparatus 1000 may be equivalent to the first network device 801 in the system 800, or equivalent to an execution component in the first network device 801.

FIG. 11 is a schematic diagram of a structure of a network layer reachable information transmission apparatus according to an embodiment of this application. As shown in FIG. 11, the apparatus 1100 includes: a receiving module 1101, which may be configured to perform step 905; and an obtaining module 1102, which may be configured for a process of obtaining, based on the first part and the second part of the advertisement packet, a plurality of pieces of routing information corresponding to the plurality of destination ends.

Optionally, the common information field includes a route type field, and the obtaining module 1102 may be configured to determine, based on the route type field included in the advertisement packet, to obtain, based on the first part and the second part, the plurality of pieces of routing information corresponding to the plurality of destination ends.

Optionally, the common information field further includes the first length field and the second length field, and the obtaining module 1102 is configured to parse the common information field of the first part and the plurality of private information fields of the second part based on the first length field and the plurality of third length fields, to obtain the plurality of pieces of routing information corresponding to the plurality of destination ends.

Optionally, the common information field further includes a first length field, and the obtaining module 1102 is configured to parse the common information field of the first part based on the first length field, to obtain the plurality of pieces of routing information corresponding to the plurality of destination ends.

Optionally, the common information field further includes a first length field, each of the plurality of private information fields further includes a third length field, and the obtaining module 1102 is configured to parse the common information field of the first part and the plurality of private information fields of the second part based on the first length field and the plurality of third length fields, to obtain the plurality of pieces of routing information corresponding to the plurality of destination ends.

Optionally, the common information field further includes a second length field, or each of the plurality of private information fields further includes a corresponding third length field, and the obtaining module is configured to parse the plurality of private information fields based on the second length field or based on a plurality of third length fields, to obtain the plurality of pieces of routing information corresponding to the plurality of destination ends, where the second length field is used to store a total length of the plurality of private information fields, and the third length field is used to store a length of the corresponding private information field.

Optionally, the apparatus 1100 further includes:
a storage module 1103, which may be configured to store the advertisement NLRI in the advertisement packet, or store the plurality of pieces of NLRI.

It should be understood that the apparatus 1100 corresponds to the second network device in the foregoing method embodiments, and the modules and the foregoing other operations and/or functions in the apparatus 1100 are respectively used to implement steps and methods performed by the second network device in the method embodiments. For specific details, refer to the foregoing method embodiments. For brevity, details are not described herein again.

It should be understood that, when the apparatus 1100 receives the advertisement packet and determines the plurality of pieces of NLRI, division of the foregoing function modules is merely used for illustration. In actual application, the foregoing functions can be allocated to and implemented by different function modules based on a requirement, that is, an internal structure of the apparatus 1100 is divided into different function modules to implement all or some of the functions described above. In addition, the apparatus 1100 provided in the foregoing embodiment and the foregoing method embodiments belong to a same concept. For a specific implementation process of the apparatus, refer to the foregoing method embodiments. Details are not described herein again.

It should be understood that the apparatus 1100 may be equivalent to the second network device 802 in the system 800, or equivalent to an execution component in the second network device 802.

Corresponding to the method embodiments and the virtual apparatus embodiments provided in this application, an embodiment of this application further provides a network device. The following describes a hardware structure of the network device.

A network device 1200 or a network device 1300 corresponds to the first network device or the second network device in the foregoing method embodiments, and hardware, modules, and the foregoing other operations and/or functions of the network device 1200 or the network device 1300 are respectively used to implement steps and methods performed by the first network device or the second network device in the method embodiments. For specific details of a procedure of how the network device 1200 or the network device 1300 generates an advertisement packet or parses an advertisement packet, refer to the foregoing method embodiments. For brevity, details are not described herein again. The steps in the foregoing method embodiments are completed by using an integrated logic circuit of hardware in a processor of the network device 1200 or the network device 1300 or instructions in a form of software. The steps of the method disclosed with reference to embodiments of this application may be directly performed by a hardware processor, or may be performed by a combination of hardware and software modules in the processor. The software module may be located in a mature storage medium in the art, such as a random access memory, a flash memory, a read-only memory, a programmable read-only memory, an electrically erasable programmable memory, or a register. The storage medium is located in a memory, and the processor reads information in the memory and completes the steps in the foregoing method in combination with hardware of the processor. To avoid repetition, details are not described herein again.

The network device 1200 or the network device 1300 corresponds to the apparatus 1000 or the apparatus 1100 in the foregoing virtual apparatus embodiment, and each function module in the apparatus 1000 or the apparatus 1100 is implemented by using software of the network device 1200 or the network device 1300. In other words, the function module included in the apparatus 1000 or the apparatus 1100 may be generated after the processor of the network device 1200 or the network device 1300 reads program code stored in a memory.

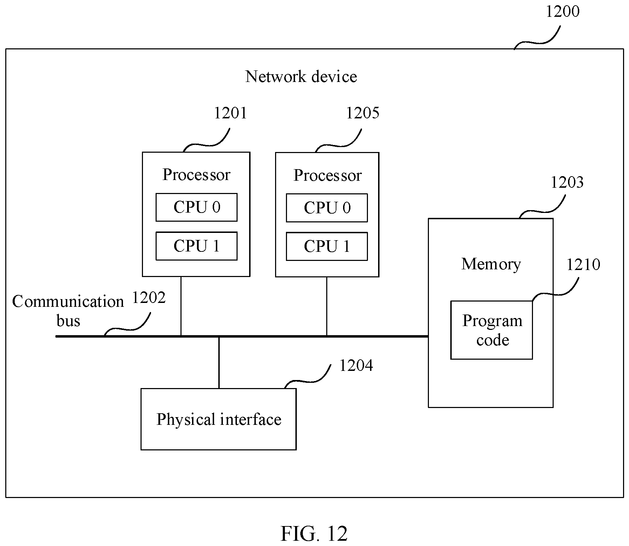

FIG. 12 is a schematic diagram of a structure of a network device according to an embodiment of this application. The network device 1200 may be configured as a first network device or a second network device.

The network device 1200 includes at least one processor 1201, a communication bus 1202, a memory 1203, and at least one physical interface 1204.

The processor 1201 may be a general-purpose central processing unit (central processing unit, CPU), a network processor (network processor, NP), or a microprocessor, or may be one or more integrated circuits configured to implement the solutions in this application, for example, an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable logic gate array (field programmable gate array, FPGA), a generic array logic (generic array logic, GAL), or any combination thereof.

The communication bus 1202 is configured to transfer information between the foregoing components. The communication bus 1202 may be classified into an address bus, a data bus, a control bus, and the like. For ease of indication, the bus is indicated by using only one bold line in the figure. However, it does not indicate that there is only one bus or only one type of bus.

The memory 1203 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disk storage, an optical disc storage (including a compact disc, a laser disc, an optical disc, a digital versatile disc, a Blu-ray disc, or the like), a disk storage medium or another magnetic storage device, or any other medium that can be used to carry or store expected program code in a form of instructions or a data structure and that can be accessed by a computer. However, the memory 1203 is not limited thereto. The memory 1203 may exist independently, and is connected to the processor 1201 by using the communication bus 1202. Alternatively, the memory 1203 may be integrated with the processor 1201.

The physical interface 1204 is any apparatus such as a transceiver, and configured to communicate with another device or a communication network. The physical interface 1204 includes a wired communication interface, and may further include a wireless communication interface. The wired communication interface may be, for example, an ethernet interface. The ethernet interface may be an optical interface, an electrical interface, or a combination thereof. The wireless communication interface may be a wireless local area network (wireless local area network, WLAN) interface, a cellular network communication interface, or a combination thereof. The physical interface 1204 is also referred to as a physical port.

During specific implementation, in an embodiment, the processor 1201 may include one or more CPUs such as a CPU 0 and a CPU 1 in FIG. 12.

During specific implementation, in an embodiment, the network device 1200 may include a plurality of processors, for example, the processor 1201 and a processor 1205 that are shown in FIG. 12. Each of these processors may be a single-core processor (single-CPU), or may be a multi-core processor (multi-CPU). The processor herein may refer to one or more devices, circuits, and/or processing cores configured to process data (for example, computer program instructions).

During specific implementation, in an embodiment, the network device 1200 may further include an output device 1206 and an input device 1207. The output device 1206 communicates with the processor 1201, and may display information in a plurality of manners. For example, the output device 1206 may be a liquid crystal display (liquid crystal display, LCD), a light emitting diode (light emitting diode, LED) display device, a cathode ray tube (cathode ray tube, CRT) display device, or a projector (projector). The input device 1207 communicates with the processor 1201, and may receive a user input in a plurality of manners. For example, the input device 1207 may be a mouse, a keyboard, a touchscreen device, or a sensor device.

In some embodiments, the memory 1203 is configured to store program code 1210 for executing the solutions of this application, and the processor 1201 may execute the program code 1210 stored in the memory 1203 to implement a corresponding function. For example, a program stored in the program code 1210 may be invoked to implement a function of the generation module 1001 in the apparatus 1000, or implement a function of the determining module 1102 in the apparatus 1100. In other words, the network device 1200 may implement, through cooperation between the processor 1201 and the program code 1210 in the memory 1203, the methods provided in the foregoing method embodiments.

The network device 1200 in this embodiment of this application may correspond to the first network device or the second network device in the foregoing method embodiments, and the processor 1201, the physical interface 1204, and the like in the network device 1200 may implement functions of the first network device or the second network device and/or steps and methods performed by the first network device or the second network device in the foregoing method embodiments. For brevity, details are not described herein again.

In some embodiments, the generation module 1001 in the apparatus 1000 may be equivalent to the processor 1201 in the network device 1200. The sending module 1002 and the obtaining module 1003 in the apparatus 1000 are equivalent to the physical interface 1204 in the network device 1200. The storage module 1004 in the apparatus 1000 is equivalent to the memory 1203 in the network device 1200.

In some embodiments, the receiving module 1101 in the apparatus 1100 is equivalent to the physical interface 1204 in the network device 1200. The obtaining module 1102 in the apparatus 1100 may be equivalent to the processor 1201 in the network device 1200. The storage module 1103 in the apparatus 1100 may be equivalent to the memory 1203 in the network device 1200.

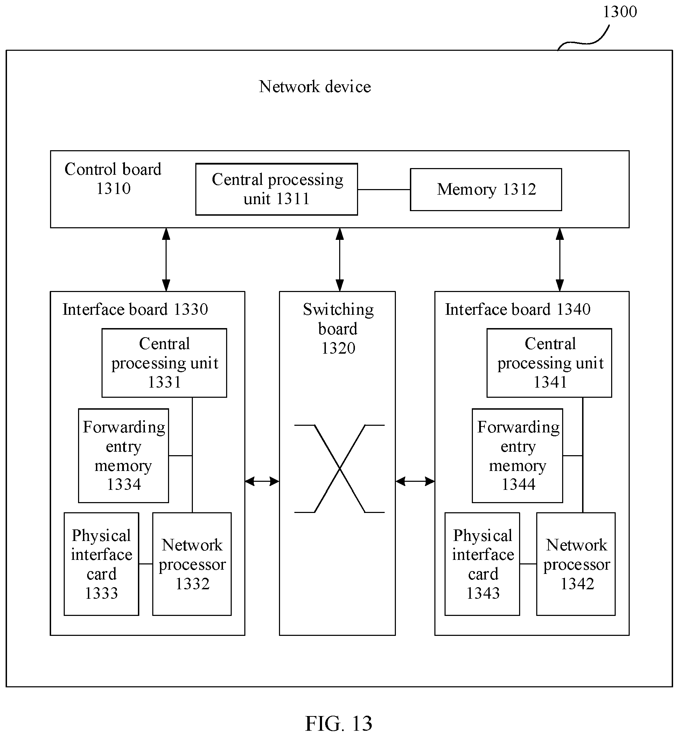

FIG. 13 is a schematic diagram of a structure of a network device according to an embodiment of this application. The network device 1300 may be configured as a first network device or a second network device.

The network device 1300 includes a control board 1310 and an interface board 1330.

The control board 1310 is also referred to as a main processing unit (main processing unit, MPU) or a route processor card (route processor card). The control board 1310 controls and manages components in the network device 1300, including functions of route calculation, device management, device maintenance, and protocol processing. The control board 1310 includes a central processing unit 1311 and a memory 1312.

The interface board 1330 is also referred to as a line processing unit (line processing unit, LPU), a line card (line card), or a service board. The interface board 1330 is configured to provide various service interfaces and implement data packet forwarding. The service interfaces include but are not limited to an ethernet interface, a POS (Packet over SONET/SDH) interface, and the like. The ethernet interface is, for example, flexible ethernet clients (Flexible Ethernet Clients, FlexE Clients). The interface board 1330 includes a central processing unit 1331, a network processor 1332, a forwarding entry memory 1334, and a physical interface card (physical interface card, PIC) 1333.

The central processing unit 1331 on the interface board 1330 is configured to control and manage the interface board 1330, and communicate with the central processing unit 1311 on the control board 1310.

The network processor 1332 is configured to implement packet forwarding processing. A form of the network processor 1332 may be a forwarding chip. Specifically, processing of an uplink packet includes processing of an inbound interface of the packet and forwarding table lookup, and processing of a downlink packet includes forwarding table lookup and the like.

The physical interface card 1333 is configured to implement a physical layer connection function, from which original traffic enters the interface card 1330, and a processed packet is sent from the physical interface card 1333. The physical interface card 1333 includes at least one physical interface, and the physical interface is also referred to as a physical port. The physical interface card 1333 is also referred to as a subcard, which may be installed on the interface board 1330, and is responsible for converting an optical/electrical signal into a packet, performing validity check on the packet, and then forwarding the packet to the network processor 1332 for processing. In some embodiments, the central processing unit 1331 of the interface board 1303 may also perform a function of the network processor 1332, for example, implement software forwarding based on a general-purpose CPU. Therefore, the network processor 1332 is not required in the physical interface card 1333.

Optionally, the network device 1300 includes a plurality of interface boards. For example, the network device 1300 further includes an interface board 1340. The interface board 1340 includes a central processing unit 1341, a network processor 1342, a forwarding entry memory 1344, and a physical interface card 1343.

Optionally, the network device 1300 further includes a switching board 1320. The switching board 1320 may also be referred to as a switch fabric unit (switch fabric unit, SFU). When the network device has a plurality of interface boards 1330, the switching board 1320 is configured to complete data exchange between the interface boards. For example, the interface board 1330 and the interface board 1340 may communicate with each other by using the switching board 1320.

The control board 1310 is coupled to the interface board 1330. For example, the control board 1310, the interface board 1330, the interface board 1340, and the switching board 1320 are connected to a platform backboard by using a system bus for interworking. In a possible implementation, an inter-process communication protocol (inter-process communication, IPC) channel is established between the control board 1310 and the interface board 1330, and communication is performed between the control board 1310 and the interface board 1330 by using the IPC channel.

Logically, the network device 1300 includes a control plane and a forwarding plane. The control plane includes the control board 1310 and the central processing unit 1331. The forwarding plane includes components that perform forwarding, such as the forwarding entry memory 1334, the physical interface card 1333, and the network processor 1332. The control plane performs functions such as routing, generating a forwarding table, processing signaling and protocol packets, and configuring and maintaining a device status. The control plane delivers the generated forwarding table to the forwarding plane. On the forwarding plane, the network processor 1332 performs, based on the forwarding table delivered by the control plane, table lookup and forwarding on a packet received by the physical interface card 1333. The forwarding table delivered by the control plane may be stored in the forwarding entry memory 1334. In some embodiments, the control plane and the forwarding plane may be completely separate on different devices.

If the network device 1300 is configured as a first network device, the central processing unit 1311 generates an advertisement packet. The network processor 1332 triggers the physical interface card 1333 to send the advertisement packet to a second network device.

If the network device 1300 is configured as a second network device, the network processor 1332 receives an advertisement packet from the physical interface card 1333, and determines a plurality of pieces of NLRI based on advertisement NLRI in the advertisement packet.

It should be understood that the sending module 503 in the apparatus 1000 is equivalent to the physical interface card 1333 or the physical interface card 1343 in the network device 1300, and the obtaining module 501 and the determining module 502 in the apparatus 1000 may be equivalent to the central processing unit 1311 or the central processing unit 1331 in the network device 1300.

It should be understood that the receiving module 1101 in the apparatus 1100 is equivalent to the physical interface card 1333 or the physical interface card 1343 in the network device 1300, and the obtaining module 1102 in the apparatus 1100 may be equivalent to the central processing unit 1311 or the central processing unit 1331 in the network device 1300.

It should be understood that an operation on the interface board 1340 is consistent with an operation on the interface board 1330 in this embodiment of this application. For brevity, details are not described. It should be understood that the network device 1300 in this embodiment may correspond to the first network device or the second network device in the foregoing method embodiments. The control board 1310, the interface board 1330, and/or the interface board 1340 in the network device 1300 may implement functions and/or various steps performed by the first network device or the second network device in the foregoing method embodiments. For brevity, details are not described herein again.

It should be noted that, there may be one or more control boards. When there are a plurality of control boards, the plurality of control boards may include an active control board and a standby control board. It should be noted that there may be one or more interface boards, and the network device with a stronger data processing capability provides more interface boards. There may also be one or more physical interface cards on the interface board. There may be no switching board or one or more switching boards. When there are a plurality of switching boards, load balancing and redundancy backup may be implemented together. In a centralized forwarding architecture, the network device may not need the switching board, and the interface board is responsible for a service data processing function of the entire system. In a distributed forwarding architecture, the network device may include at least one switching board, and data is exchanged between a plurality of interface boards by using the switching board, to provide a largecapacity data exchange and processing capability. Therefore, a data access and processing capability of the network device in the distributed architecture is stronger than that of the device in the centralized architecture. Optionally, in another form of the network device, there may be only one board. In other words, there is no switching board, and functions of the interface board and the control board are integrated on the one board. In this case, the central processing unit on the interface board and the central processing unit on the control board may be combined into one central processing unit on the board, to perform functions of the two central processing units after combination. A device in this form (for example, a network device such as a low-end switch or router) has a relatively weak data exchange and processing capability. A specific architecture that is to be used depends on a specific networking deployment scenario. This is not limited herein.

In some possible embodiments, the first network device or the second network device may be implemented as a virtual device. For example, the virtual device may be a virtual machine (virtual machine, VM) that runs a program for sending a packet, and the virtual machine is deployed on a hardware device (for example, a physical server). The virtual machine is a complete software-simulated computer system that has complete hardware system functions and that runs in an entirely isolated environment. The virtual machine may be configured as a first network device or a second network device. For example, the first network device or the second network device may be implemented based on a general physical server in combination with a network functions virtualization (network functions virtualization, NFV) technology. The first network device or the second network device is a virtual host, a virtual router, or a virtual switch. After reading this application, a person skilled in the art may obtain, on a general physical server through virtualization by using the NFV technology, the first network device or the second network device that has the foregoing functions. Details are not described herein.

It should be understood that the network device in the foregoing product forms respectively has any function of the first network device or the second network device in the foregoing method embodiments. Details are not described herein again.

An embodiment of this application provides a computer program product. When the computer program product runs on a network device, the network device is enabled to perform the method performed by the first network device in the foregoing method embodiments.

An embodiment of this application provides a computer program product. When the computer program product runs on a network device, the network device is enabled to perform the method performed by the second network device in the foregoing method embodiments.

An embodiment of this application further provides a chip, including a processor and an interface circuit. The interface circuit is configured to receive instructions and transmit the instructions to the processor. The processor may be configured to perform the instructions to enable the first network device or the second network device to perform the network layer reachable information transmission method. The processor is coupled to a memory, the memory is configured to store a program or instructions, and when the program or the instructions are executed by the processor, the chip system implements the method in any one of the foregoing method embodiments.

Optionally, there may be one or more processors in the chip system. The processor may be implemented by using hardware, or may be implemented by using software. When the processor is implemented by the hardware, the processor may be a logic circuit, an integrated circuit, or the like. When the processor is implemented by using the software, the processor may be a general-purpose processor, and is implemented by reading software code stored in the memory.

Optionally, there may be one or more memories in the chip system. The memory may be integrated with the processor, or may be disposed separately from the processor. This is not limited in this application. For example, the memory may be a non-transitory processor, for example, a read-only memory ROM. The memory and the processor may be integrated on a same chip, or may be separately disposed on different chips. A type of the memory and a manner of disposing the memory and the processor are not specifically limited in this application.

For example, the chip system may be a field programmable gate array (field programmable gate array, FPGA), an application-specific integrated circuit (application-specific integrated circuit, ASIC), a system on chip (system on chip, SoC), a CPU, an NP, a digital signal processor (digital signal processor, DSP), a micro controller unit (micro controller unit, MCU), a programmable logic device (programmable logic device, PLD), or another integrated chip.

All of the foregoing technical solutions may form optional embodiments of this disclosure through any combination. Details are not described herein again.

A person of ordinary skill in the art may understand that all or some of the steps of the foregoing embodiments may be implemented by hardware or a program instructing related hardware. The program may be stored in a computer-readable storage medium. The storage medium may be a read-only memory, a magnetic disk, a compact disc, or the like.

The foregoing description is merely example embodiments of this application, but is not intended to limit this application. Any modification, equivalent replacement, or improvement made without departing from the spirit and principle of this application should fall within the protection scope of this application.

## Claims

1. A network layer reachable information transmission method, wherein the method is performed by a first network device, and the method comprises:
generating an advertisement packet, wherein the advertisement packet is used to advertise a plurality of pieces of network layer reachable information NLRI of a plurality of destination ends, the advertisement packet comprises a first part and a second part, the first part comprises a common information field corresponding to the plurality of pieces of NLRI, the common information field comprises same information in the plurality of pieces of NLRI, the second part comprises a plurality of private information fields corresponding to the plurality of pieces of NLRI, and each of the plurality of private information fields comprises information other than the same information in NLRI corresponding to each private information field; and
sending the advertisement packet to a second network device.

2. The method according to claim 1, wherein the common information field further comprises a first length field, and the first length field is used to store a total length of the common information field and the plurality of private information fields, or is used to store a total length of the common information field.

3. The method according to claim 1 or 2, wherein the common information field further comprises a second length field, and the second length field is used to store a total length of the plurality of private information fields.

4. The method according to any one of claims 1 to 3, wherein the common information field comprises a route type field, and the route type field indicates a network device that receives the advertisement packet to obtain, based on the first part and the second part, a plurality of pieces of routing information corresponding to the plurality of destination ends.

5. The method according to any one of claims 1 to 4, wherein the common information field comprises at least one of a route distinguisher field, an ethernet segment identifier field, and an ethernet tag identifier field.

6. The method according to any one of claims 1 to 5, wherein the common information field further comprises at least one of a gateway internet protocol IP address length field, a gateway IP address field, a media access control MAC address length field, an IP address length field, or an IP prefix length field, wherein the gateway IP address length field is used to store a gateway IP address length corresponding to one of the plurality of destination ends, the gateway IP address field is used to store a gateway IP address corresponding to one of the plurality of destination ends, the MAC address length field is used to store a MAC address length of one of the plurality of destination ends, the IP address length field is used to store an IP address length of one of the plurality of destination ends, and the IP prefix length field is used to store an IP prefix mask length of one of the plurality of destination ends.

7. The method according to any one of claims 1 to 6, wherein one or more of the plurality of private information fields comprise at least one of: an IP address field, a MAC address field, or at least one multi-protocol label switching MPLS label field, wherein the IP address field is used to store an IP address of a destination end corresponding to the private information field, the MAC address field is used to store a MAC address of the destination end corresponding to the private information field, and the at least one MPLS label field is used to store at least one MPLS label of the destination end corresponding to the private information field.

8. The method according to claim 7, wherein one or more of the plurality of private information fields further comprise at least one of an IP address length field, a MAC address length field, an MPLS indication field, or an IP prefix length field, wherein the IP address length field is used to store an IP address length of a destination end corresponding to the private information field, the MAC address length field is used to store a MAC address length of the destination end corresponding to the private information field, the MPLS indication field is used to indicate the at least one MPLS label field, and the IP prefix length field is used to store the IP prefix mask length of one of the plurality of destination ends.

9. The method according to claim 7 or 8, wherein the IP address of the destination end comprises one of an internet protocol version 4 IPv4 address or an internet protocol version 6 IPv6 address.

10. The method according to claim 1 or 2, wherein each private information field further comprises a third length field, and the third length field is used to store a length of the private information field.

11. The method according to any one of claims 1 to 10, wherein the advertisement packet is a border gateway protocol BGP packet, and the first part and the second part are located in a route that is used by the BGP packet to advertise MAC/IP addresses of the plurality of destination ends, or the first part and the second part are located in a route that is used by the BGP packet to advertise IP prefix addresses of the plurality of destination ends.

12. The method according to any one of claims 1 to 11, wherein each of the first network device and the second network device is one of a provider edge PE device, a route reflector, or an autonomous system boundary router.

13. The method according to any one of claims 1 to 12, wherein the destination end is a destination network or a destination device.

14. A network layer reachable information transmission method, wherein the method is performed by a second network device, and the method comprises:
receiving an advertisement packet from a first network device, wherein the advertisement packet is used to advertise a plurality of pieces of network layer reachable information NLRI of a plurality of destination ends, the advertisement packet comprises a first part and a second part, the first part comprises a common information field corresponding to the plurality of pieces of NLRI, the common information field comprises same information in the plurality of pieces of NLRI, the second part comprises a plurality of private information fields corresponding to the plurality of pieces of NLRI, and each of the plurality of private information fields comprises information other than the same information in NLRI corresponding to each private information field; and
obtaining, based on the first part and the second part of the advertisement packet, a plurality of pieces of routing information corresponding to the plurality of destination ends.

15. The method according to claim 14, wherein the common information field comprises a route type field, and the obtaining, based on the first part and the second part of the advertisement packet, a plurality of pieces of routing information corresponding to the plurality of destination ends comprises:
determining, based on the route type field comprised in the advertisement packet, to obtain, based on the first part and the second part, the plurality of pieces of routing information corresponding to the plurality of destination ends.

16. The method according to claim 14 or 15, wherein the common information field further comprises a first length field and a second length field, and the obtaining, based on the first part and the second part of the advertisement packet, a plurality of pieces of routing information corresponding to the plurality of destination ends comprises:
parsing the common information field of the first part and the plurality of private information fields of the second part based on the first length field and the second length field, to obtain the plurality of pieces of routing information corresponding to the plurality of destination ends, wherein the second length field is used to store a total length of the plurality of private information fields, and the first length field is used to store a total length of the common information field, or used to store a total length of the common information field and the plurality of private information fields.

17. The method according to claim 14 or 15, wherein the common information field further comprises a first length field, each of the plurality of private information fields further comprises a third length field, and the obtaining, based on the first part and the second part of the advertisement packet, a plurality of pieces of routing information corresponding to the plurality of destination ends comprises:
parsing the common information field of the first part and the plurality of private information fields of the second part based on the first length field and the plurality of third length fields, to obtain a plurality of pieces of routing information corresponding to the plurality of destination ends, wherein the first length field is used to store a total length of the common information field, and the third length field is used to store a length of a corresponding private information field.

18. The method according to any one of claims 14 to 17, wherein the common information field comprises at least one of a route distinguisher field, an ethernet segment identifier field, and an ethernet tag identifier field.

19. The method according to any one of claims 14 to 18, wherein the common information field further comprises at least one of a gateway internet protocol IP address length field, a gateway IP address field, a media access control MAC address length field, an IP address length field, or an IP prefix length field, wherein the gateway IP address length field is used to store a gateway IP address length corresponding to one of the plurality of destination ends, the gateway IP address field is used to store a gateway IP address corresponding to one of the plurality of destination ends, the MAC address length field is used to store a MAC address length of one of the plurality of destination ends, the IP address length field is used to store an IP address length of one of the plurality of destination ends, and the IP prefix length field is used to store an IP prefix mask length of one of the plurality of destination ends.

20. The method according to any one of claims 14 to 19, wherein one or more of the plurality of private information fields comprise at least one of: an IP address field, a MAC address field, or at least one multi-protocol label switching MPLS label field, wherein the IP address field is used to store an IP address of a destination end, the MAC address field is used to store a MAC address of the destination end corresponding to the private information field, and the at least one MPLS label field is used to store at least one MPLS label of the destination end corresponding to the private information field.

21. The method according to claim 20, wherein one or more of the plurality of private information fields further comprise at least one of an IP address length field, a MAC address length field, an MPLS indication field, or an IP prefix length field, wherein the IP address length field is used to store an IP address length of a destination end corresponding to the private information field, the MAC address length field is used to store a MAC address length of the destination end corresponding to the private information field, the MPLS indication field is used to indicate the at least one MPLS label field of the destination end corresponding to the private information field, and the IP prefix length field is used to store the IP prefix mask length of one of the plurality of destination ends.

22. The method according to any one of claims 14 to 21, wherein the advertisement packet is a border gateway protocol BGP packet, and the first part and the second part are located in a route that is used by the BGP packet to advertise MAC/IP addresses of the plurality of destination ends, or the first part and the second part are located in a route that is used by the BGP packet to advertise IP prefix addresses of the plurality of destination ends.

23. The method according to any one of claims 14 to 22, wherein the destination end is a destination network or a destination device.

24. A network layer reachable information transmission system, wherein the system comprises a first network device and a second network device, wherein
the first network device is configured to: generate an advertisement packet, wherein the advertisement packet is used to advertise a plurality of pieces of network layer reachable information NLRI of a plurality of destination ends, the advertisement packet comprises a first part and a second part, the first part comprises a common information field corresponding to the plurality of pieces of NLRI, the common information field comprises same information in the plurality of pieces of NLRI, the second part comprises a plurality of private information fields corresponding to the plurality of pieces of NLRI, and each of the plurality of private information fields comprises information other than the same information in NLRI corresponding to each private information field; and send the advertisement packet to the second network device; and
the second network device is configured to receive the advertisement packet, and obtain, based on the first part and the second part of the advertisement packet, a plurality of pieces of routing information corresponding to the plurality of destination ends.

25. The system according to claim 24, wherein the common information field comprises a route type field, and that the second network device is configured to obtain, based on the first part and the second part of the advertisement packet, a plurality of pieces of routing information corresponding to the plurality of destination ends comprises:
the second network device is configured to determine, based on the route type field comprised in the advertisement packet, to obtain, based on the first part and the second part, the plurality of pieces of routing information corresponding to the plurality of destination ends.

26. The system according to claim 24 or 25, wherein the common information field further comprises a first length field and a second length field, and that the second network device is configured to obtain, based on the first part and the second part of the advertisement packet, a plurality of pieces of routing information corresponding to the plurality of destination ends comprises:
the second network device is configured to parse the common information field of the first part and the plurality of private information fields of the second part based on the first length field and the second length field, to obtain the plurality of pieces of routing information corresponding to the plurality of destination ends, wherein the second length field is used to store a total length of the plurality of private information fields, and the first length field is used to store a total length of the common information field, or used to store a total length of the common information field and the plurality of private information fields.

27. The system according to any one of claims 24 to 26, wherein the common information field further comprises a first length field, each of the plurality of private information fields further comprises a third length field, and that the second network device is configured to obtain, based on the first part and the second part of the advertisement packet, a plurality of pieces of routing information corresponding to the plurality of destination ends comprises:
the second network device is configured to parse the common information field of the first part and the plurality of private information fields of the second part based on the first length field and the plurality of third length fields, to obtain a plurality of pieces of routing information corresponding to the plurality of destination ends, wherein the first length field is used to store a total length of the common information field, and the third length field is used to store a length of a corresponding private information field.

28. The system according to claim 24, wherein the common information field comprises at least one of a route distinguisher field, an ethernet segment identifier field, and an ethernet tag identifier field.

29. A network layer reachable information transmission apparatus, comprising:
a generation module, configured to generate an advertisement packet, wherein the advertisement packet is used to advertise a plurality of pieces of network layer reachable information NLRI of a plurality of destination ends, the advertisement packet comprises a first part and a second part, the first part comprises a common information field corresponding to the plurality of pieces of NLRI, the common information field comprises same information in the plurality of pieces of NLRI, the second part comprises a plurality of private information fields corresponding to the plurality of pieces of NLRI, and each of the plurality of private information fields comprises information other than the same information in NLRI corresponding to each private information field; and
a sending module, configured to send the advertisement packet to a second network device.

30. The apparatus according to claim 29, wherein the common information field further comprises a first length field, and the first length field is used to store a total length of the common information field and the plurality of private information fields, or is used to store a total length of the common information field.

31. The apparatus according to claim 29 or 30, wherein the common information field further comprises a second length field, and the second length field is used to store a total length of the plurality of private information fields.

32. The apparatus according to any one of claims 29 to 31, wherein the common information field comprises a route type field, and the route type field indicates a network device that receives the advertisement packet to obtain, based on the first part and the second part, a plurality of pieces of routing information corresponding to the plurality of destination ends.

33. The apparatus according to any one of claims 29 to 32, wherein one or more of the plurality of private information fields comprise at least one of: an IP address field, a MAC address field, or at least one multi-protocol label switching MPLS label field, wherein the IP address field is used to store an IP address of a destination end corresponding to the private information field, the MAC address field is used to store a MAC address of the destination end corresponding to the private information field, and the at least one MPLS label field is used to store at least one MPLS label of the destination end corresponding to the private information field.

34. The apparatus according to claim 33, wherein one or more of the plurality of private information fields further comprise at least one of an IP address length field, a MAC address length field, an MPLS indication field, or an IP prefix length field, wherein the IP address length field is used to store an IP address length of a destination end corresponding to the private information field, the MAC address length field is used to store a MAC address length of the destination end corresponding to the private information field, the MPLS indication field is used to indicate the at least one MPLS label field, and the IP prefix length field is used to store the IP prefix mask length of one of the plurality of destination ends.

35. A network layer reachable information transmission apparatus, comprising:
a receiving module, configured to receive an advertisement packet from a first network device, wherein the advertisement packet is used to advertise a plurality of pieces of network layer reachable information NLRI of a plurality of destination ends, the advertisement packet comprises a first part and a second part, the first part comprises a common information field corresponding to the plurality of pieces of NLRI, the common information field comprises same information in the plurality of pieces of NLRI, the second part comprises a plurality of private information fields corresponding to the plurality of pieces of NLRI, and each of the plurality of private information fields comprises information other than the same information in NLRI corresponding to each private information field; and
an obtaining module, configured to obtain, based on the first part and the second part of the advertisement packet, a plurality of pieces of routing information corresponding to the plurality of destination ends.

36. The apparatus according to claim 35, wherein the common information field comprises a route type field; and
the obtaining module is configured to determine, based on the route type field comprised in the advertisement packet, to obtain, based on the first part and the second part, the plurality of pieces of routing information corresponding to the plurality of destination ends.

37. The apparatus according to claim 35 or 36, wherein the common information field further comprises a first length field and a second length field; and
the obtaining module is configured to parse the common information field of the first part and the plurality of private information fields of the second part based on the first length field and the second length field, to obtain the plurality of pieces of routing information corresponding to the plurality of destination ends, wherein the second length field is used to store a total length of the plurality of private information fields, and the first length field is used to store a total length of the common information field, or used to store a total length of the common information field and the plurality of private information fields.

38. The apparatus according to claim 35 or 36, wherein the common information field further comprises a first length field, and each of the plurality of private information fields further comprises a third length field; and
the obtaining module is configured to parse the common information field of the first part and the plurality of private information fields of the second part based on the first length field and the plurality of third length fields, to obtain the plurality of pieces of routing information corresponding to the plurality of destination ends, wherein the first length field is used to store a total length of the common information field, and the third length field is used to store a length of a corresponding private information field.

39. A network device, wherein the network device comprises a processor and a memory, the memory stores program code, and the program code is loaded and executed by the processor, so that the network device implements the network layer reachable information transmission method according to any one of claims 1 to 23.

40. A computer-readable storage medium, wherein the computer-readable storage medium stores program code; and when the program code is run on a computer, the computer is enabled to perform the network layer reachable information transmission method according to any one of claims 1 to 23.
